# EUROPEAN PATENT APPLICATION

(11) **EP 4 800 568 A1**
(43) Date of publication of application: **02.09.2026**
(21) Application number: 26152340.1
(22) Date of filing: 16.01.2026
(51) Int. Cl.: G06F 16/22, G06F 16/334, G06F 16/41, G06F 16/56, G06Q 50/02

(54) **AGRONOMIC DATA MANAGEMENT PLATFORM**

(30) Priority: 28.02.2025 US 202519067109
(71) Applicant: Deere & Company, Moline, IL 61265 (US)
(72) Inventor: Fotouhi, Mo, Madison (US); Crosby, Trevor Wayne, Seattle (US); Moeini, Mohammadreza, Chicago (US); Roth, Dylan James, Austin (US); Grove, Jared T, Los Alamos (US); Kirk, Ryan A, Urbandale (US); Bitzko, Benjamin E, Salt Lake City (US)
(74) Representative: Reddie & Grose LLP

(57) **Abstract**

A set of candidate representation vectors stored in a search-optimized database is identified based on input data for a reference agronomic entity, with each candidate representation vector representing a similar entity candidate. Agronomic entities may include fields, machines, customers, among others. The set of candidate representation vectors is filtered using filter parameters to generate a filtered subset. Results data associated with the filtered subset is output, wherein the results data enable at least one agronomic management operation such as machine settings adjustments or technology adoption opportunities, among others.

## Description

### TECHNICAL FIELD

This disclosure relates generally to agronomic data management, and more specifically to identifying similar agronomic entities.

### BACKGROUND

Agricultural operations rely on data-driven decision making to optimize crop yields, resource utilization, and overall farm management. As the volume and variety of agronomic data continue to grow exponentially, farmers and agricultural professionals face challenges in efficiently analyzing and leveraging this information. Traditional data management systems may struggle to handle the complex, multi-dimensional nature of agronomic data, which can include field characteristics, weather patterns, soil composition, crop performance metrics, and equipment telemetry. The scale and heterogeneity of this data may pose computational challenges for existing agricultural management platforms.

### SUMMARY

Disclosed herein are implementations of an agronomic data management platform for informing agronomic management decisions (e.g., the determination of optimal machine settings).

In one embodiment, a computer-implemented method is provided. In this embodiment, the method includes identifying, based on input data for a reference agronomic entity, a set of candidate representation vectors stored in a search-optimized representation database, each candidate representation vector representing a similar entity candidate of a set of similar entity candidates. The method further includes filtering the set of candidate representation vectors using filter parameters to generate a filtered subset. Additionally, the method includes outputting results data associated with the filtered subset, wherein the results data enable at least one agronomic management operation.

In another embodiment, a system is provided. In this embodiment, the system comprises one or more memories and one or more processors communicatively coupled to the one or more memories and configured to execute instructions stored in the one or more memories to cause the system to identify, based on input data for a reference agronomic entity, a set of candidate representation vectors stored in a search-optimized representation database, each candidate representation vector representing a similar entity candidate of a set of similar entity candidates. The system is further configured to filter the set of candidate representation vectors using filter parameters to generate a filtered subset, and output results data associated with the filtered subset, wherein the results data enable at least one agronomic management operation.

In yet another embodiment, one or more non-transitory computer readable media storing instructions operable to cause one or more processors to perform operations are provided. In this embodiment, the operations include identifying, based on input data for a reference agronomic entity, a set of candidate representation vectors stored in a search-optimized representation database, each candidate representation vector representing a similar entity candidate of a set of similar entity candidates. The operations further include filtering the set of candidate representation vectors using filter parameters to generate a filtered subset, and outputting results data associated with the filtered subset, wherein the results data enable at least one agronomic management operation.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a block diagram of a system for agronomic data management.
FIG. 2 is an example of a computing device.
FIG. 3 is a flowchart illustrating an example process for comparing agronomic entities.
FIG. 4 is a block diagram illustrating an example system for processing and comparing agronomic entity data.
FIG. 5 is a block diagram illustrating an example process for generating entity representations.
FIG. 6 is a flowchart illustrating an example process for generating and processing field embeddings using multiple data modalities.
FIGS. 7A and 7B are examples of graphical user interfaces (GUIs) for presenting results data associated with similar agronomic entity searching.
FIGS. 8A and 8B are other examples of GUIs for presenting results data associated with similar agronomic entity searching.
FIGS. 9A and 9B are other examples of GUIs for presenting results data associated with similar agronomic entity searching.
FIGS. 10A and 10B are other examples of GUIs for presenting results data associated with similar agronomic entity searching.
FIG. 11 is a flowchart of an example of a technique associated with agronomic data management.

### DETAILED DESCRIPTION

An agronomic data management platform is a computing system implemented in one or more computing devices that facilitates the management of data associated with agricultural operations. An agronomic data management platform may be configured to collect, store, process, and/or analyze data related to agricultural operations. Agronomic data management platforms may integrate various types of data, including soil conditions, crop health, weather patterns, irrigation schedules, pest activity, and equipment performance. An agronomic data management platform may be configured to aggregate data from multiple sources, such as sensors, drones, satellite imagery, and user input, to create a centralized platform for managing agricultural information. By analyzing this data, the system may facilitate decision-making processes, such as determining machine settings, optimizing planting schedules, enhancing resource allocation, and improving crop yields. Additionally, the system may enable users to track long-term trends, monitor compliance with regulatory standards, and implement sustainable farming practices.

A limitation in some current agronomic data management platforms is the inability to perform rapid, comprehensive similarity searches across vast datasets of agronomic entities. As used herein, the term "agronomic entity" refers to any agronomic-related entity for which a defining set of data exists. An agronomic entity may be, or include a field, a zone, a farm, a farmer, or a farming operation, among other examples. For example, an agronomic entity may be a specific corn field, a specific zone of the corn field, or a collection of corn fields, among other examples. Similarity searching, in this context, refers to the process of identifying and retrieving data or patterns within agronomic datasets that share similar characteristics or attributes. Similarity searching may be employed to analyze agronomic data for decision-making and predictive modeling. Similarity searching typically involves the use of algorithms that compare features such as soil composition, crop health indices, weather conditions, pest activity, or yield performance to find comparable instances within historical or real-time data. For example, similarity searching may be used to identify regions in a field that have similar soil moisture levels or nutrient profiles, which could inform irrigation or fertilization strategies. It may also facilitate comparisons between past and current pest outbreaks based on environmental conditions and historical pest activity, thereby enabling more effective pest management.

Existing systems may rely on simple filtering mechanisms that operate on discrete feature values, lacking the sophistication to consider the intricate interplay between various agronomic factors. This approach may not capture the nuanced similarities between agricultural entities, such as fields or zones, which are often defined by a complex interrelation of climate, environmental, and geometric characteristics. Consequently, farmers and agronomists may struggle to identify truly comparable entities for benchmarking, decision support, or predictive modeling purposes.

The computational complexity of processing and comparing multi-modal agronomic data in real-time presents another hurdle. Multi-modal agronomic data refers to agricultural data collected from multiple types of sources or modalities, each representing different aspects of the agricultural environment. Modalities may include, for example, image data, text data, or tabular data, among other examples. Current systems may require substantial processing time to analyze and compare agricultural entities, making it impractical for use in live, dynamic scenarios such as on-the-fly machine setting adjustments or real-time decision support. This latency may limit the potential for automated, data-driven optimizations in agricultural operations, particularly in time-sensitive situations where rapid adjustments could impact crop outcomes or resource efficiency.

Furthermore, the lack of efficient similarity search capabilities may hamper the development of advanced agronomic management tools and analytics. Without the ability to quickly identify and analyze similar agricultural entities, it may become challenging to generate accurate, context-specific recommendations for farm management practices, equipment settings, or crop selection. This limitation may affect individual farm productivity and impede broader agricultural research and development efforts that rely on comprehensive, data-driven insights across diverse farming conditions and practices.

Implementations according to this disclosure address problems such as these by providing an agronomic data management platform for rapid, comprehensive similarity searches across vast datasets of agricultural entities. The agronomic data management platform combines data from diverse sources and modalities into comprehensive numeric representations of agricultural entities, enabling efficient vector similarity calculations for delivering queries and recommendations. These representations enable more nuanced comparisons than traditional filtering techniques, considering the complex interplay between various agronomic factors.

The system identifies, based on input data for a reference agronomic entity, a set of candidate representation vectors stored in a search-optimized representation database, where each candidate representation vector represents a similar entity candidate (e.g., a similar agronomic entity to the reference agronomic entity) of a set of similar entity candidates. The system then filters the set of candidate representation vectors using filter parameters to generate a filtered subset and outputs results data associated with the filtered subset, enabling at least one agronomic management operation. The at least one agronomic management operation may include, for example, a machine settings establishment (e.g., to establish settings for an agricultural machine or implement), a machine settings adjustment (e.g., to adjust settings for an agricultural machine or implement), a biological input decision (e.g., a choice of a seed variety), an operational efficiency improvement, a resource allocation optimization, a technology adoption opportunity, or a display operation in which a display device presents a representation of the results data (e.g., a display of a representation of at least one similar entity candidate of a set of similar entity candidates), among other examples. In some implementations, an agronomic management operation may include obtaining, based on the results data, at least one of a set of machine settings, a set of agronomic strategies, a set of parameter values associated with an agronomic tool, or an indication of a change in a user interface of an agronomic tool, among other examples.

The system generates entity representations by processing multiple data modalities, including image data, tabular data, and text data. For image data, the system may use a convolutional neural network (CNN), or other image embedding method, to generate image embeddings. Tabular data may be processed to create geometric complexity feature arrays, while text data may undergo tokenization to generate representational embeddings. These diverse data types are then combined through a modality fusion operation, which may involve simple concatenation or more complex aggregation (e.g., neural network-based fusion models), depending on the context of the agronomic entity.

In some implementations, the system may include dynamic feature weighting based on specific query contexts, integration with real-time sensor data for up-to-date comparisons, or the use of different machine learning models for embedding generation. Some implementations include various indexing structures, such as locality-sensitive hashing or hierarchical navigable small world graphs, to optimize search processes. Additionally, the system can be extended to support predictive analytics, offering insights into potential future states of agronomic entities based on historical data of similar entities.

In some implementations, the system combines data from diverse sources and modalities into comprehensive numeric representations of agricultural entities. Accordingly, an advantage of the comprehensive numeric representations is the ability to capture complex, multi-dimensional characteristics of agricultural entities that cannot be adequately described by simple feature filtering. Additionally, an advantage of the comprehensive numeric representations is improved accuracy in identifying truly similar entities by considering the nuanced interplay between various agronomic factors. Furthermore, an advantage of the comprehensive numeric representations is the flexibility to adjust feature weightings or biases within the representations to suit different comparison contexts or use cases.

In some implementations, the system uses vector similarity calculations and optimizations for querying agricultural entities. Accordingly, an advantage of the vector similarity calculations is the ability to perform rapid, sub-second searches across vast datasets of agricultural entities. Additionally, an advantage of the vector similarity calculations is the capability to return similar entities without explicitly filtering individual features, providing more flexible and context-sensitive results. Moreover, an advantage of the vector similarity calculations is improved scalability, allowing the system to handle increasingly large and complex datasets while maintaining low query latency.

In some implementations, the system generates entity representations using multiple data modalities, including image data, tabular data, and text data. Accordingly, an advantage of the multi-modal entity representations is the ability to incorporate diverse types of information, such as field geometry from satellite imagery, soil composition data, and textual or tabular crop history, into a single, unified representation. Additionally, an advantage of the multi-modal entity representations is increased robustness and accuracy in entity comparisons by leveraging complementary information from different data sources. Furthermore, an advantage of the multi-modal entity representations is the potential to uncover non-obvious relationships or similarities between entities that may not be apparent when considering each data modality in isolation.

To describe some implementations in greater detail, reference is first made to examples of systems, machines, implements, hardware and software structures used to implement a system for agronomic data management.

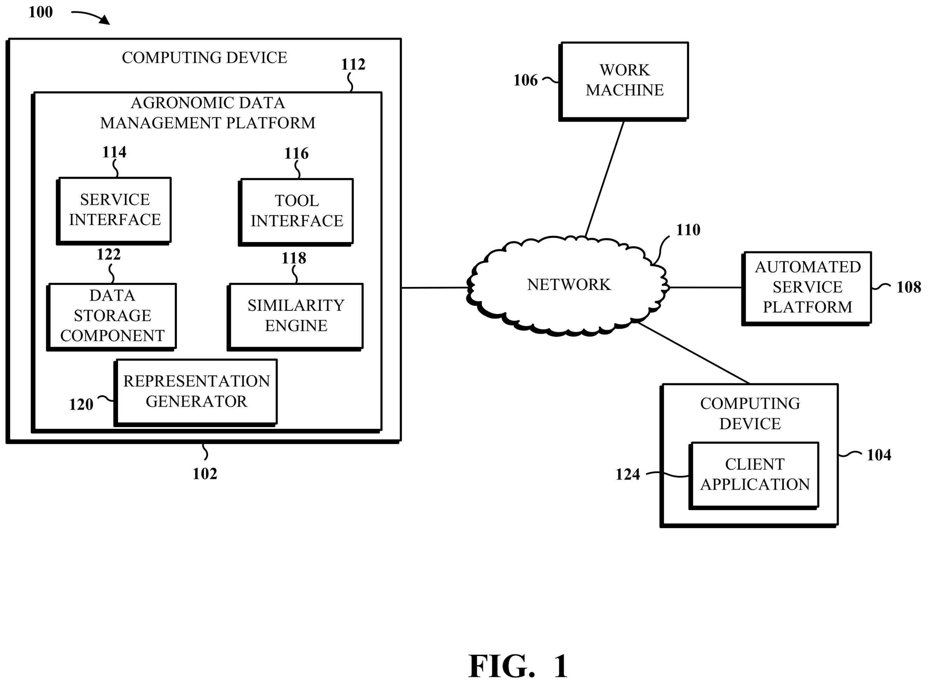

FIG. 1 is a block diagram of an example system 100 for agronomic data management. As shown, the system 100 includes multiple computing devices 102, 104 a work machine 106, and an automated service platform 108 connected through a network 110.

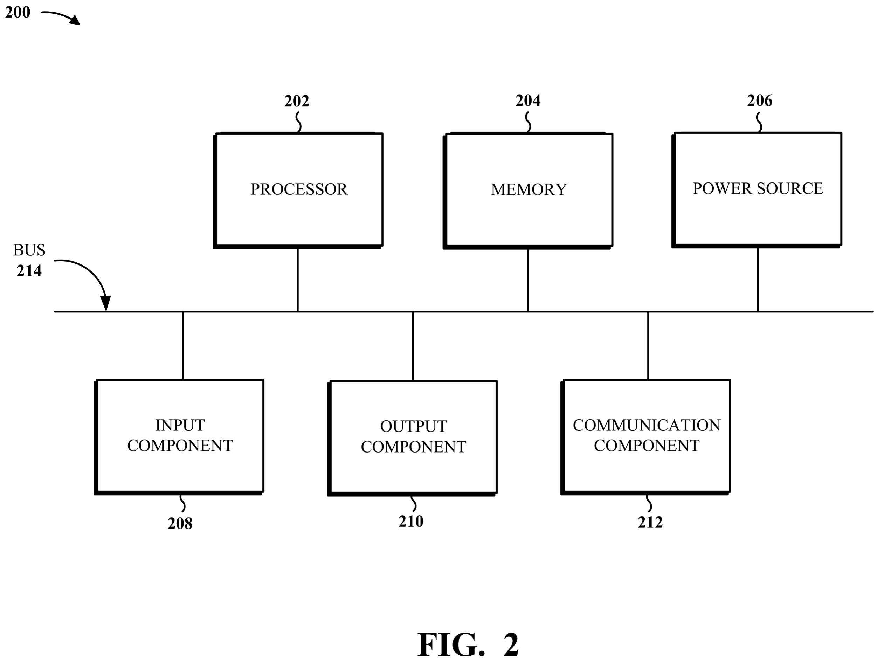

The system 100 may be implemented using various hardware environments that include computer system components such as general-purpose computers, dedicated computer systems, peripheral devices, and other components. In some implementations, one or more of the computing devices 102, 104, the work machine 106, the automated service platform 108, and the agronomic data management platform 112 may be implemented using one or more computing devices, such as the computing device 200 of FIG. 2. In some implementations, at least some aspects of the system 100 (e.g., the agronomic data management platform 112) may be implemented within one or more cloud computing environments, where various components may be executed in different configurations, including in parallel. In some implementations, one or more components of the system 100 can be implemented using a single computing device or a combination of several interconnected computing devices.

For example, two or more of the computing devices 102, 104, the automated service platform 108, or the agronomic data management platform 112 may be integrated into a single computing device. In some implementations, one or more of the computing devices 102, 104, the automated service platform 108, or the agronomic data management platform 112 may be integrated into the work machine 106. Additionally or alternatively, two or more of the computing devices 102, 104, the automated service platform 108, or the agronomic data management platform 112 may be geographically distant from one another and may be connected through the network 110. In some implementations, one or more of the computing devices 102, 104, the automated service platform 108, and the agronomic data management platform 112 can be implemented using one or more nodes (or computing devices 200) of a distributed computing system (e.g., a system of computing nodes) such as via a cloud computing implementation. In some implementations, one or more of the computing devices 102, 104, the work machine 106, or the automated service platform 108 may be omitted.

The computing devices 102, 104 may include various types of electronic devices capable of processing data and communicating over the network 110. For example, the computing devices 102, 104 may include desktop computers, laptop computers, tablet computers, smartphones, or other mobile devices. In some implementations, the computing devices 102, 104 may be specialized agricultural devices designed for use in field operations. The computing devices 102, 104 may include input/output interfaces, display screens, and various sensors for collecting environmental data.

The work machine 106 represents agricultural equipment that can receive and implement agronomic management operations based on the system's outputs. For example, the work machine 106 may be a tractor, combine harvester, planter, sprayer, or other type of agricultural machinery. In some implementations, the work machine 106 may be an autonomous or semi-autonomous vehicle capable of performing agricultural tasks with minimal human intervention. The work machine 106 may be equipped with various sensors, actuators, and control systems that enable it to perform precise agricultural operations based on data received from the agronomic data management platform 112.

The network 110 facilitates communication between the computing devices 102, 104, the work machine 106, and the automated service platform 108. The network 110 may include various types of communication networks, such as local area networks (LANs), wide area networks (WANs), cellular networks, satellite networks, or any combination thereof. In some implementations, the network 110 may include wired networks, wireless networks, or a combination thereof to enable data transfer between system components in various operating environments.

The automated service platform 108 interfaces with the network 110 to provide automated services to one or more of the components of the system 100 and/or to one or more components not depicted in FIG. 1. For example, the automated service platform 108 may include applications built on top of a search-optimized representation database maintained by one or more components of the system 100. For example, the automated service platform 108 may include cloud-based services for data storage, processing, and analysis. In some implementations, the automated service platform 108 may host machine learning models or other artificial intelligence systems that can analyze agronomic data and generate recommendations for agricultural operations. The automated service platform 108 may also provide APIs or other interfaces that allow third-party applications to integrate with the system 100.

As shown in FIG. 1, the computing device 102 may include an agronomic data management platform 112. The agronomic data management platform 112 may be configured to process and manage agronomic data. The agronomic data management platform 112 may be implemented as a distributed computing system, a cloud-based platform, or a combination of on-premises and cloud infrastructure. In some implementations, the agronomic data management platform 112 may be scalable to handle large volumes of data from multiple sources and provide real-time analysis and recommendations.

The agronomic data management platform 112 includes a service interface 114, a tool interface 116, a similarity engine 118, a representation generator 120, and a data storage component 122. In some implementations, one or more of the service interface 114, the tool interface 116, the similarity engine 118, the representation generator 120, or the data storage component 122 can be omitted. In some implementations, one or more of the service interface 114, the tool interface 116, the similarity engine 118, the representation generator 120, or the data storage component 122 can be implemented using the same or a different computing device or devices implementing other elements of the agronomic data management platform 112. For example, one or more of the service interface 114, the tool interface 116, the similarity engine 118, the representation generator 120, or the data storage component 122 can be implemented using the computing device 200 of FIG. 2. In some implementations, one or more of the service interface 114, the tool interface 116, the similarity engine 118, the representation generator 120, or the data storage component 122 can be implemented using separate computing devices. In some implementations, two or more of the service interface 114, the tool interface 116, the similarity engine 118, the representation generator 120, or the data storage component 122 may be integrated into a single component.

The service interface 114 may provide communication interfaces for the agronomic data management platform 112. The service interface 114 may include application programming interfaces (APIs), web services, or other similar communications protocols that enable seamless interaction with the agronomic data management platform 112. For example, the service interface 114 may enable integration with farm management software, weather data providers, or satellite imaging services. In some implementations, the service interface 114 may support synchronous and/or asynchronous communication patterns to accommodate various use cases and data exchange requirements.

The tool interface 116 of the agronomic data management platform 112 provides specialized interfaces for agricultural tools and applications. The tool interface 116 may support communication with various types of agricultural equipment, sensors, and software tools used in farming operations. For example, the tool interface 116 may enable direct communication with precision farming equipment (e.g., the work machine 106), enabling real-time data exchange and control of agricultural machinery. In some implementations, the tool interface 116 may include support for industry-standard protocols used in agriculture, such as the Global System for Mobile Communications (GSM) specification, Universal Mobile Telecommunications System (UMTS), Long Term Evolution (LTE), IEEE 802.11 (Wi-Fi), ISO 11783 (often referred to as ISOBUS), or message queuing telemetry transport (MQTT), among other examples.

In some implementations, the tool interface 116 may facilitate communications between the agronomic data management platform 112 and the automated service platform 108. In some implementations, the tool interface 116 may implement a communication protocol enabling access to the agronomic data management platform 112 by external applications or devices. For example, agronomic tools such as applications, scripts, or other software components may interact with and utilize the functionality of the agronomic data management platform 112 via the tool interface 116. Agronomic tools may include, for example, a field health monitoring tool that allows users to input real-time crop health data (e.g., from satellite imagery or drone-based sensors) and compare it to historical datasets to identify fields or regions exhibiting similar conditions (e.g., to assist in predicting potential issues such as nutrient deficiencies, pest infestations, or diseases); a crop recommendation tool that analyzes soil properties, climate data, and historical crop performance to identify suitable crops or crop varieties based on similar environmental conditions (e.g., to assist farmers in selecting optimal crops for a given season or field); an irrigation optimization tool that compares current soil moisture levels and weather forecasts with historical irrigation datasets to recommend optimal irrigation schedules (e.g., based on comparable scenarios and their associated water usage outcomes); a pest and/or disease management tool that leverages similarity searching to match observed pest or disease patterns with historical outbreaks under similar environmental conditions (e.g., to suggest effective pest control measures or disease management strategies based on the outcomes of comparable cases); a yield prediction tool that uses similarity searching to compare current crop growth metrics with historical datasets to predict potential yields; a precision fertilizer application tool that evaluates current soil nutrient levels and compares them with similar historical scenarios to recommend site-specific fertilizer types and application rates (e.g., to improve resource efficiency and reduce environmental impact); a sustainability analytics tool that identifies sustainable farming practices by analyzing fields with similar characteristics where sustainable approaches have been successfully implemented (e.g., to provide recommendations for reducing inputs or improving long-term soil health); a machine settings management tool which prescribes optimal machine settings for a current operation based on machine settings leveraged in past, similar operations; and/or a field management dashboard that integrates with a similarity search system to display personalized insights and recommendations for specific fields, among other examples. The tool interface 116 may also enable the system 100 and the automated service platform 108 to communicate with agricultural equipment, systems, and applications, such as the work machine 106 and its various software components.

The similarity engine 118 may be configured to process similarity comparisons between agronomic entities. The similarity engine 118 may utilize algorithms and data structures to efficiently identify similar agricultural entities based on multiple criteria. For example, the similarity engine 118 may compare fields based on soil composition, climate patterns, crop history, and geometric characteristics. In some implementations, the similarity engine 118 may employ vector similarity calculations and optimizations to enable searches across vast datasets of agricultural entities.

The similarity engine 118 may utilize various similarity metrics and distance measures to quantify the similarities (such as the extent of similarities) between agronomic entities. For example, the similarity engine 118 may employ cosine similarity, Euclidean distance, or Jaccard similarity, depending on the nature of the data being compared. In some implementations, the similarity engine 118 may use a combination of these metrics, applying different weights to various features based on their relative importance in the comparison context.

The similarity engine 118 may incorporate advanced indexing structures to optimize search performance across large datasets. For instance, the similarity engine 118 may utilize locality-sensitive hashing (LSH) or hierarchical navigable small world (HNSW) graphs to enable efficient approximate nearest neighbor searches. These indexing structures may allow the similarity engine 118 to quickly identify candidate matches without exhaustively comparing every entity in the search-optimized representation database, potentially reducing search times from hours to milliseconds for large-scale datasets.

In some aspects, the similarity engine 118 may support dynamic feature weighting and context-specific similarity calculations. This capability may enable the similarity engine 118 to adjust its comparison criteria and weights based on user-defined preferences, seasonal variations, or specific agronomic objectives. For example, when comparing fields for crop rotation planning, the engine may place higher importance on soil composition and previous crop history; and when comparing fields for water management, the similarity engine 118 may prioritize topographical features and historical precipitation data. This flexibility may enable the similarity engine 118 to provide more relevant and actionable insights across a wide range of agricultural use cases.

The representation generator 120 is responsible for generating entity representations used by the similarity engine 118. This component may process various types of input data, including image data, tabular data, and text data, to create comprehensive numeric representations of agricultural entities. For example, the representation generator 120 may use CNNs to process satellite imagery of fields, extract geometric features, and combine them with other data from other sources (e.g., modalities) to create a unified entity representation. In some implementations, the representation generator 120 may support dynamic feature weighting and modality fusion techniques to create context-specific entity representations. For example, the representation generator 120 may generate a number of different representations for an agronomic entity, each of which corresponds to a context or combination of contexts.

For example, in some implementations, the representation generator 120 may be configured to obtain entity data associated with an agronomic entity. The entity data may include any number of different data modalities such as, for example, image data, tabular data, and/or text data. The representation generator 120 may generate an entity representation of the agronomic entity based on the entity data and store the generated entity representation of the agronomic entity in a search-optimized representation database.

For example, the entity data may include image data, and generating the entity representation of the agronomic entity may include generating modified image data by pre-processing the image data. Pre-processing the image data may include, for example, identifying an entity boundary of the agronomic entity based on at least one of the image data or an entity ID corresponding to the agronomic entity; generating, based on a set of coordinates corresponding to the entity boundary, an entity boundary image; and modifying the entity boundary image by performing at least one of a resizing operation, a cropping operation, a padding operation, or a color conversion operation. The representation generator 120 may generate, based on a machine learning component, a set of image embeddings based on the modified image data and may generate the entity representation of the agronomic entity based on the set of image embeddings.

In some implementations, the entity data may include tabular data, and generating the entity representation of the agronomic entity may include generating, based on a machine learning component, a set of tabular embeddings based on the tabular data; and generating the entity representation of the agronomic entity based on the set of tabular embeddings. In an example, generating the set of tabular embeddings may include generating a geometric complexity feature array based on the tabular data and generating one or more copies of the geometric complexity feature array. The geometric complexity feature array and the one or more copies may be the set of tabular embeddings.

In some implementations, the entity data may include text data such as, for example, words, numbers, or other text-based data. Generating the entity representation of the agronomic entity may include generating, based on a machine learning component, a set of representational embeddings based on the text data. The representation generator 120 may generate the entity representation of the agronomic entity based on the set of representational embeddings. For example, generating the set of representational embeddings may involve performing a tokenization operation on the text data. The tokenization operation may convert textual descriptions into numerical representations that capture semantic meaning and contextual relationships. In some implementations, the machine learning component used for text embedding generation may be a pre-trained language model, such as a large language model (LLM), which has been fine-tuned on agricultural domain-specific texts. In some implementations, entity data may be received as video data and/or audio data and converted to image data and/or text data, respectively, which may be processed as described herein.

In some implementations, the entity data comprises a first data modality and a second data modality, and generating the entity representation of the agronomic entity may include generating, based on a first machine learning component, a first set of embeddings based on the first data modality; generating, based on a second machine learning component, a second set of embeddings based on the second data modality; and generating the entity representation by performing a modality fusion operation based on the first set of embeddings and the second set of embeddings. In some implementations, performing the modality fusion operation may include concatenating the first data modality with the second data modality. In some implementations, performing the modality fusion operation may include encoding, using a neural network-based fusion model, a combination of the first data modality and the second data modality to generate the entity representation.

The data storage component 122 stores data used by the system, including entity representations, raw data from various sources, and intermediate processing results. The data storage component 122 may utilize various database technologies, such as relational databases, NoSQL databases, or specialized vector databases optimized for similarity searches. In some implementations, the data storage component 122 may employ distributed storage systems to handle large volumes of data and provide high availability and fault tolerance. The data storage component 122 may be or include a search-optimized representation database. In some implementations, the similarity engine 118 may leverage the search-optimized representation database to efficiently search for similar agricultural entities. A search-optimized representation database is a database structure that seeks to increase the efficiency of search operations by organizing the database elements in a manner that facilitates access and retrieval operations.

As shown, the computing device 104 includes a client application 124. The client application 124 may be configured to communicate with the agronomic data management platform 112. For example, the client application 124 may interact with the agronomic data management platform 112 through the network 110 and the service interface 114. In some implementations, the client application 124 may be configured as a client of the service interface 114. The client application 124 may be implemented as a mobile application, desktop application, or other computer-executable application.

The client application 124 may enable various types of human interfaces that allow users to visualize, query, and analyze agricultural data. In some implementations, the client application 124 may provide real-time alerts, visualizations, and actionable insights derived from the system 100. In some aspects, the client application 124 may be configured to receive outputs from the similarity engine 118. For example, the client application 124 may allow users to view similarity search results, analyze field comparisons, and receive recommendations for agronomic management operations. In some implementations, the client application 124 may support offline functionality, allowing users to work with cached data when network connectivity is limited.

FIG. 2 is a block diagram of an example computing device 200. The computing device 200 may be, be similar to, include, or be included in, an apparatus for performing one or more methods, processes, algorithms, operations, tasks, and/or techniques, as described herein. The computing device 200 may be, be similar to, include, or be included in, a work machine, a server, a sensor system, or a communication device, among other examples. For example, the computing device 200 may be used to implement one or more components of the system 100 shown in FIG. 1. The computing device 200 includes a processor 202, memory 204, power source 206, input component 208, output component 210, and communication component 212, all communicatively coupled via a bus 214.

The processor 202 may be configured to execute instructions and process data for the computing device 200. The processor 202 may be a central processing unit, such as a microprocessor, and may include single or multiple processors having single or multiple processing cores. The processor 202 may include another type of device, or multiple devices, configured for manipulating or processing information. For example, the processor 202 may include multiple processors interconnected in one or more manners, including hardwired or networked. The operations of the processor 202 may be distributed across multiple devices or units that can be coupled directly or across a local area or other suitable type of network. The processor 202 may include a cache, or cache memory, for local storage of operating data or instructions. In some implementations, the processor 202 may incorporate field-programmable gate arrays (FPGAs) or application-specific integrated circuits (ASICs) to optimize performance for specific algorithms.

The memory 204 may be configured to store data and instructions for the computing device 200. The memory 204 includes one or more memory components, which may each be volatile memory or non-volatile memory. The memory 204 may include non-transitory memory. The volatile memory can be random access memory (RAM) (e.g., a DRAM module, such as DDR SDRAM). The non-volatile memory of the memory 204 may be a disk drive, a solid state drive, flash memory, or phase-change memory. In some implementations, the memory 204 may be distributed across multiple devices. For example, the memory 204 may include network-based memory or memory in multiple clients or servers performing the operations of those multiple devices.

The memory 204 may include data for access by the processor 202. For example, the memory 204 may include executable instructions, application data, or an operating system, among other examples. The executable instructions may include one or more application programs, which may be loaded or copied, in whole or in part, from non-volatile memory to volatile memory to be executed by the processor 202. For example, the executable instructions may include instructions for performing techniques described in this disclosure. In some implementations, the application data may include functional programs, such as a computational programs, analytical programs, database programs, and so on. The operating system may be, for example, Microsoft Windows^{®}, Mac OS X^{®}, or Linux^{®}; an operating system for a mobile device, such as a smartphone or tablet device; or an operating system for a non-mobile device, such as a mainframe computer.

The power source 206 provides power to the computing device 200. For example, the power source 206 may be an interface to an external power distribution system. In an example, the power source 206 may be a battery, such as where the computing device 200 is a mobile device or is otherwise configured to operate independently of an external power distribution system. In some implementations, the computing device 200 may include or otherwise use multiple power sources. In some such implementations, the power source 206 can be a backup battery.

The input component 208 and/or the output component 210 may include one or more input interfaces and/or output interfaces configured for facilitating communication between the computing device 200 and one or more peripheral devices such as, for example, one or more sensors, detectors, displays, input devices, or other devices configured for facilitating interaction with the computing device 200 or the environment around the computing device 200. An input device may, for example, include a positional input device, such as a mouse, touchpad, touchscreen, or the like; a keyboard; or another suitable human or machine interface device. In some implementations, an input device may include various sensors, such as cameras, LiDAR sensors, GPS receivers, or soil moisture sensors. An output device may, for example, include a display, such as a liquid crystal display, a cathode-ray tube, a light emitting diode display, or other suitable display. In some implementations, the output component 210 may incorporate augmented reality (AR) or virtual reality (VR) interfaces. In some implementations, the peripherals devices may include a geolocation component, such as a GPS device. In some examples, the peripheral devices may include a temperature sensor for measuring temperatures of components of the computing device 200, such as the processor 202.

The communication component 212 may be configured to enable data exchange between the computing device 200 and other devices or systems. The communication component 212 may include an interface for facilitating a connection or link to a network (e.g., the network 110 shown in FIG. 1). The communication component 212 may include a wired network interface or a wireless network interface. The computing device 200 may communicate with other devices via the communication component 212 using one or more network protocols, such as using Ethernet, TCP, IP, power line communication, an IEEE 802.X protocol (e.g., Wi-Fi, Bluetooth, or ZigBee), infrared, visible light, general packet radio service (GPRS), global system for mobile communications (GSM), code-division multiple access (CDMA), Z-Wave, a cellular communication protocol, another protocol, or a combination thereof.

The communication component 212 may include a transceiver, which may include a transmitter or a receiver. In some configurations, one or a combination of antenna(s), modem(s), multiple input multiple output (MIMO) detectors, receive processors, transmit processors, and/or the transmit MIMO processors may be included in the transceiver. The transceiver may be under control of or used by one or more processors, and in some aspects in conjunction with processor-readable code stored in the memory, to perform aspects of the methods, processes, techniques, and/or operations described herein.

For simplicity, this disclosure may use statements such as "machine X performs an action Y." These statements should be understood to mean that a computing device (e.g., a controller) within machine X performs the action Y or executes instructions to cause machine X to perform the action Y. A software application, which is executable by the computing device and may be included in or work in conjunction with machine X, can also perform action Y or cause machine X to perform action Y. The computing device may be the computing device 200.

An apparatus, computing device (e.g., the computing device 200), one or more components of a computing device, or a system, among other examples, described herein may include one or more chips, system-on-chips (SoCs), chipsets, packages, and/or devices that individually or collectively constitute or comprise a processing system. A processing system may include processor (or "processing") circuitry in the form of one or multiple processors, microprocessors, processing units (such as central processing units (CPUs), graphics processing units (GPUs), neural processing units (NPUs) and/or digital signal processors (DSPs)), processing blocks, application-specific integrated circuits (ASIC), programmable logic devices (PLDs) (such as field programmable gate arrays (FPGAs)), or other discrete gate or transistor logic or circuitry (all of which may be generally referred to herein individually as "processors" or collectively as "processor" or "processor circuitry"). One or more of the processors may be individually or collectively configurable or configured to perform various functions or operations described herein. A group of processors collectively configurable or configured to perform a set of functions may include a first processor configurable or configured to perform a first function of the set and a second processor configurable or configured to perform a second function of the set, or may include the group of processors all being configured or configurable to perform the set of functions.

The processing system may further include memory in the form of one or more memory devices, memory blocks, memory elements or other discrete gate or transistor logic or circuitry, each of which may include tangible storage media such as RAM or read-only memory (ROM), or combinations thereof (all of which may be generally referred to herein individually as "memories" or collectively as "memory" or "memory circuitry"). One or more of the memories may be coupled (for example, operatively coupled, communicatively coupled, electronically coupled, or electrically coupled) with one or more of the processors and may individually or collectively store processor-executable code (such as software) that, when executed by one or more of the processors, may configure one or more of the processors to perform various functions or operations described herein. Additionally or alternatively, in some examples, one or more of the processors may be preconfigured to perform various functions or operations described herein without requiring configuration by software.

The terms "processor," "controller," or "controller/processor" may refer to one or more controllers and/or one or more processors. For example, reference to "a/the processor," "a/the controller/processor," or the like (in the singular) should be understood to refer to any one or more of the processors described in connection with FIG. 2, such as a single processor or a combination of multiple different processors. Reference to "one or more processors" should be understood to refer to any one or more of the processors described in connection with FIG. 2.

In some aspects, a single processor may perform all of the operations described as being performed by the one or more processors. In some aspects, a first set of (one or more) processors of the one or more processors may perform a first operation described as being performed by the one or more processors, and a second set of (one or more) processors of the one or more processors may perform a second operation described as being performed by the one or more processors. The first set of processors and the second set of processors may be the same set of processors or may be different sets of processors. Reference to "one or more memories" should be understood to refer to any one or more memories of a corresponding device, such as the memory described in connection with FIG. 2. For example, operations described as being performed by one or more memories can be performed by the same subset of the one or more memories or different subsets of the one or more memories.

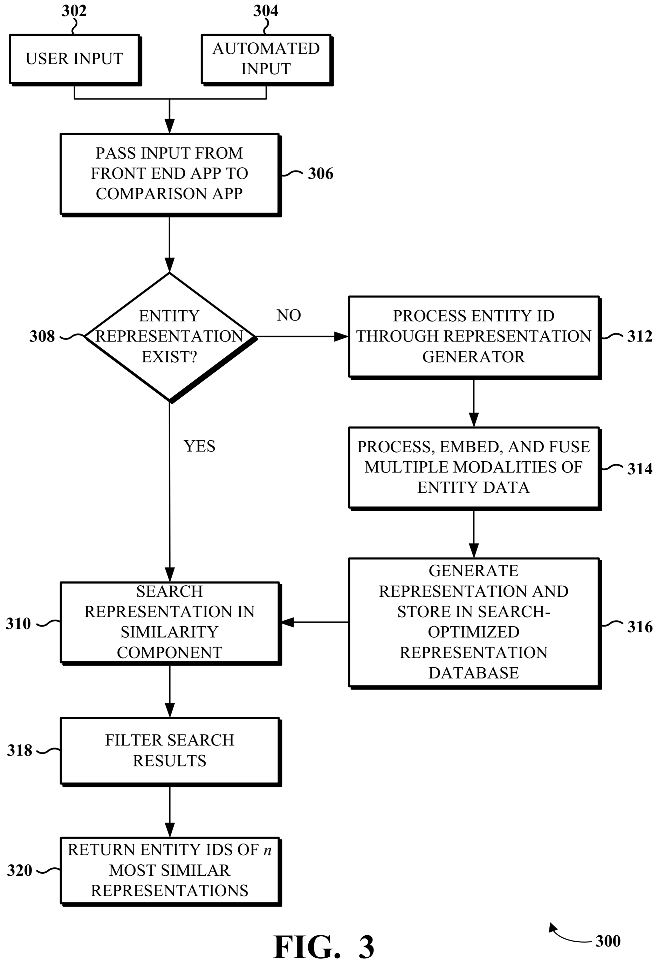

FIG. 3 is a flowchart illustrating an example process 300 for comparing agronomic entities. The process 300 may be implemented by one or more components of the agronomic data management platform 112 shown in FIG. 1, such as the similarity engine 118 and the representation generator 120.

As shown in FIG. 3, the process 300 may begin with one of two possible input paths: step 302 for user input or step 304 for automated input. In some implementations, the user input at step 302 may be received through a GUI of a client application, such as the client application 124 shown in FIG. 1. For example, a user may input search criteria for finding similar agricultural fields, such as soil composition, climate patterns, or geometric characteristics. In some implementations, the user input may include a unique identifier for a specific agronomic entity, such as a field ID or a customer ID, for which similar entities are to be found. In some implementations, the user input may include parameters for defining a similarity context, such as weighting factors for different features or specifying a particular agricultural operation of interest.

The automated input at step 304 may, in some implementations, be generated by other systems or applications without direct user intervention. In some implementations, one or more tools hosted by the automated service platform 108 may initiate a similarity search by providing the input at step 304. For example, an automated crop management system may periodically initiate similarity searches to optimize machine settings or management practices across multiple fields. In some implementations, the automated input may be triggered by sensor data from agricultural equipment, such as when a tractor enters a new field and requires appropriate settings based on similar fields. The automated input may also include predefined queries scheduled to run at specific intervals or in response to certain events, such as weather changes or the start of a new growing season.

The input at steps 302 and 304 may include various types of data related to agronomic entities. In some implementations, the input may include a unique identifier (ID) for a specific agronomic entity, such as a field ID, customer ID, or machine ID. The input may include search criteria for finding similar entities, which may encompass soil composition data, climate patterns, geometric characteristics of fields, or operational parameters of agricultural machinery. In some cases, the input may specify a similarity context, including weighting factors for different features or a particular agricultural operation of interest. The input may include temporal data, such as planting dates or growing season information. In some implementations, the input may incorporate real-time sensor data from agricultural equipment, such as soil moisture levels, equipment telemetry, or geolocation information. The input may include historical data, such as past crop yields, previous management practices, or machine performance records. In some aspects, the input may specify the number of similar entities to be returned or set thresholds for similarity scores.

In some implementations, the input may indicate one or more filter parameters. For example, the filter parameters may restrict the search for similar entities based on various aspects of agronomic information, such as the presence of certain features or data types, or the similarity of those features or data types. In some implementations, each of the filter parameters may include an identification of a category from a plurality of categories. For example, a category may indicate the type of data to be included in the search, such as soil composition, climate, machine operation, or weather. In some implementations, filter parameters may include specific conditions, such as thresholds for similar entities and/or distances between entities. The filter parameters may be indicative of access permissions or restrictions, such as whether the entity is visible to certain users or systems or whether the entity can be queried.

At 306, input from either source is passed from a front-end application to a comparison application. In some implementations, the front-end application may be a web-based interface or a mobile application that interacts with users or other systems. The comparison application may be a backend service running on the agronomic data management platform 112. The passing of input at this step may involve data validation, formatting, and potentially the addition of contextual information, such as access permissions associated with the user or the automated tool, or the current time and date, among other examples.

At 308, the process 300 includes determining whether an entity representation exists for the agronomic entity specified in the input. This determination may involve querying a search-optimized representation database, such as the data storage component 122 shown in FIG. 1. In some implementations, the entity representation may be a high-dimensional vector that encapsulates various characteristics of the agronomic entity. For example, a field representation may include information about soil composition, topography, climate history, crop yield data, and geometric features. In some implementations, the representation may be a set of separate vectors for different aspects of the entity, such as one vector for physical characteristics and another for historical performance data.

If the entity representation exists (YES path from step 308), at 310, the representation is searched in a similarity component. In some implementations, this similarity component may use vector similarity calculations to efficiently identify candidate matches from a search-optimized representation database of entity representations. The similarity search may employ techniques such as cosine similarity, Euclidean distance, or more advanced methods like locality-sensitive hashing (LSH) or approximate nearest neighbor (ANN) algorithms, among other methods.

In some implementations, the search may be optimized to return results within seconds or milliseconds, even when comparing against millions of other entity representations. This optimization may be achieved through various techniques and data structures. For example, as indicated above, the system may utilize indexing structures such as LSH or HNSW graphs to enable efficient approximate nearest neighbor searches. These indexing structures may allow the similarity engine to quickly identify candidate matches without exhaustively comparing every entity in the search-optimized representation database, reducing search times for large-scale datasets.

In some implementations, the search optimization may leverage parallel processing and distributed computing techniques. By distributing the search workload across multiple processors or computing nodes, the system may be able to perform many comparisons simultaneously, further reducing the overall search time. The use of specialized hardware, such as graphics processing units (GPUs) or tensor processing units (TPUs), may also contribute to accelerating vector similarity calculations, especially for large-scale comparisons involving millions of entity representations.

If the entity representation does not exist (NO path from step 308), at 312, the entity ID is processed through a representation generator. In some implementations, the representation generator may be similar to the representation generator 120 shown in FIG. 1. The representation generator may be responsible for creating a comprehensive numeric representation of the agronomic entity based on available data. This step may involve gathering data from various sources, such as satellite imagery, soil sensors, weather stations, and historical records. In some implementations, the data may be processed using various data processing techniques including feature extraction, normalization, and preprocessing, such that the data is ready for use in entity comparison operations. For example, normalized representations of data may facilitate efficient comparison with respect to feature weightings. The representation generator may generate the entity representation by combining the data through various techniques, including by using one or more machine learning components.

A machine learning component refers to hardware and/or software capable of performing machine learning. Machine learning is a subset of artificial intelligence (AI) that involves the development of algorithms and statistical models enabling computers to perform tasks without explicit programming. Machine learning leverages large datasets to identify patterns, make decisions, and improve over time based on experience. Machine learning focuses on creating systems that can learn from data, adapt to new inputs, and generate predictions or actions.

For example, a machine learning component may be or include one or more machine learning models, machine learning algorithms, and/or machine learning systems including combinations of machine learning algorithms and machine learning models. A machine learning component may be implemented on any number of different hardware devices and may include one or more machine learning models. In machine learning, a computer can be provided with examples and be trained to perform a task such as prediction or classification, without the programmer encoding explicit instructions for the task. Machine learning includes the construction of algorithms, also referred to herein as tools, models, and/or components, which may learn from existing data and make predictions about new data. Such machine learning tools operate by building a model from example training data in order to make data-driven predictions or decisions expressed as outputs or assessments. Although example embodiments are presented with respect to a few machine learning models, the principles presented herein may be applied to other machine learning models. In some example embodiments, different machine learning models may be used. Machine learning models may include, for example, K-means clustering models, linear regression models, logistic regression (LR) models, Naive-Bayes models, random forest (RF) regression models, gradient boost models, neural networks (NN), matrix factorization models, large language models (LLMs), and/or support vector machines (SVMs), among other examples.

At step 314, multiple modalities of entity data ("data modalities") may be processed, embedded, or fused, among other examples. A data modality refers to a data type related to an agronomic entity. For example, a data modality may include image data (e.g., satellite imagery, aerial imagery, or satellite image segmentation), tabular data (e.g., yield data or prescription data), and/or text data (e.g., descriptions, observations, or notes). Multiple modalities may be processed by the agronomic data management platform 112 in a single data pipeline. The data processing operation may include feature extraction, normalization, and preprocessing, such that the data is ready for use in entity comparison operations.

In some implementations, this step may involve processing different types of data using specialized techniques. For example, satellite imagery of the field may be processed using convolutional neural networks to extract geometric and spectral features. Tabular data, such as soil test results or yield history, may be processed using feature engineering techniques and scaling operations. Text data, such as crop rotation history or management notes, may be processed using natural language processing techniques to generate representational embeddings. The fusion of these different data modalities may involve techniques such as concatenation, weighted averaging, or more complex neural network-based fusion models. For example, a fusion model may map text features to spatial features using a sequence-to-sequence framework. In some implementations, the fusion of data modalities may include creating a vector representation for different characteristics of the agronomic entity, where each vector represents a particular data modality, such as a particular field characteristic. In some implementations, the fusion may be performed in an embedding space using a technique such as a locality-sensitive hash. In some implementations, the fusion may involve various types of encodings, including representational embeddings, numeric vectors, or tabular representations.

In some implementations, the processing of multiple data modalities may enable the efficient combination of data from disparate sources and formats, providing a more comprehensive and nuanced representation of agronomic entities. By integrating diverse data types such as satellite imagery, soil sensor readings, weather data, and historical records, the system may capture a holistic view of agricultural fields or operations that would be difficult to achieve through single-modality analysis. This multi-modal approach may allow for the identification of complex patterns and relationships that may not be apparent when considering each data source in isolation.

The fusion of disparate data formats may also enhance the robustness and reliability of entity representations. For example, while satellite imagery may provide valuable information about field geometry and crop health, it may be limited by factors such as cloud cover or temporal resolution. By combining this visual data with continuous sensor readings from agricultural equipment and textual data from management logs, the system may create more consistent and accurate representations that are less susceptible to data gaps or noise in any single modality. Additionally, the ability to process and combine diverse data types may facilitate the incorporation of new data sources as they become available, allowing the system to evolve and improve over time without requiring significant restructuring of the underlying architecture.

At 316, an entity representation is generated and stored in a search-optimized representation database. In some implementations, this step may involve normalizing the fused data to ensure all features are on a comparable scale, typically between 0 and 1. The generated representation may be a fixed-length vector that captures the essential characteristics of the agronomic entity in a format optimized for similarity comparisons. The storage of this representation in a search-optimized representation database may involve indexing techniques to facilitate fast retrieval during similarity searches. In some implementations, generating an entity representation may involve one or more machine learning components. In some implementations, generating an entity representation may be similar to the process at 312.

Subsequent to generating the entity representation, the process 300 includes performing the similarity search described above, in connection with step 310. At 318, the search results are filtered. In some implementations, this filtering step may apply additional constraints or preferences that were not part of the initial similarity calculation. In some implementations, one or more of the constraints employed at step 310 may instead, or additionally, be employed at filtering step 318. Filtering the search results may involve various methods including, without limitation, clustering and threshold-based criteria. For example, results may be filtered based on filter parameters that may be based on geographic proximity, ownership information, or specific attribute thresholds. In some implementations, this step may involve re-ranking the results based on secondary criteria or applying a diversity algorithm to ensure a range of different but relevant matches are presented.

Filtering the search results, at 318, may be performed based on a set of filter parameters. In some examples, a filter parameter may indicate a similarity threshold that must be satisfied between any two entity representations. For example, a filter parameter may be a proximity threshold, such that, of the identified search results, the platform returns only those entities within a certain distance of the entity being searched for. In some examples, a filter parameter may indicate various data types that are to be included in the search results. For example, a filter parameter may indicate that only matching representations be returned that include a particular soil characteristic such as pH or nitrogen. In some examples, a filter parameter may indicate the number of entities, of the search results, that are to be returned in response to a search query. For example, a filter parameter may indicate that only entities matching 75 or more characteristics be returned, while, in other example, the filter parameter may indicate that only the top 10 matching entities be returned. For example, a filter parameter may indicate an access permission or restriction for each entity, such as whether the entity is visible to certain users or systems or whether the entity can be queried.

At 320, entity IDs of the n most similar representations may be returned. In some implementations, n may be a predefined number specified in the initial input, or it may be dynamically determined based on similarity thresholds or other criteria. The returned entity IDs may be used to retrieve additional information about the similar entities from the search-optimized representation database or other databases or systems. This step may also involve formatting the results for presentation, such as generating summary statistics or preparing data for visualization in a user interface.

In some implementations, the returned results may be used to enable various agronomic management operations. For example, the similar entity IDs may be used to retrieve successful management practices or optimal machine settings that have been effective for similar fields. This information could be used to adjust planting densities, fertilizer applications, or irrigation schedules for the queried field. In some implementations, the results may be used for benchmarking purposes, allowing farmers to compare their performance against similar operations.

The process 300 may be iterative in some implementations, with the results of one similarity search being used to refine subsequent searches. For example, a user or tool may select one of the returned similar entities and use it as the basis for a new search, effectively exploring the similarity space of agronomic entities. This iterative approach may be particularly useful for discovering relationships or for fine-tuning management strategies based on the characteristics of the most relevant similar entities.

In some implementations, the machine learning components used in entity representation generation and/or similarity searching may be continually refined and/or retrained to facilitate adaptability and improve performance over time. For example, machine learning components used to generate representation entities and/or to identify similar agronomic entities may be refined and/or retrained over time. This ongoing refinement process may involve various approaches, including supervised learning, unsupervised learning, and reinforcement learning techniques.

Supervised learning methods may be employed to update and improve the machine learning models based on feedback from domain experts or validated outcomes. For example, agronomists or farmers may provide labeled data indicating whether the system's similarity matches were accurate or relevant for specific use cases. This labeled data may be used to fine-tune the models, adjusting feature weights or modifying neural network architectures to better capture the nuances of agronomic similarity. In some implementations, the system may incorporate active learning techniques, where it identifies the most informative samples for expert labeling, thereby maximizing the efficiency of the labeling process and accelerating model improvement.

Unsupervised learning approaches may be utilized to discover latent patterns and structures within the agronomic data that may not be immediately apparent. For instance, clustering algorithms may be applied to the entity representations to identify natural groupings of similar fields or operations. These discovered clusters may then be used to refine the similarity metrics or to create more nuanced categories for comparison. In some implementations, dimensionality reduction techniques such as t-distributed stochastic neighbor embedding (t-SNE) or uniform manifold approximation and projection (UMAP) may be periodically reapplied to the growing dataset, potentially revealing new relationships between entities as more data becomes available. This unsupervised analysis may help the system adapt to emerging patterns in agricultural practices or environmental conditions without requiring explicit guidance.

Reinforcement learning techniques may be implemented to optimize the system's decision-making processes over time, particularly in scenarios where the outcomes of agronomic management decisions can be observed and quantified. For example, the system may learn to refine its similarity recommendations based on the success of management practices applied to similar fields. By tracking metrics such as crop yield, resource efficiency, or profitability, the reinforcement learning component may adjust its similarity calculations to prioritize matches that lead to better outcomes. This approach may allow the system to adapt to changing conditions, such as evolving climate patterns or new agricultural technologies, by continuously updating its understanding of what constitutes meaningful similarity in different contexts.

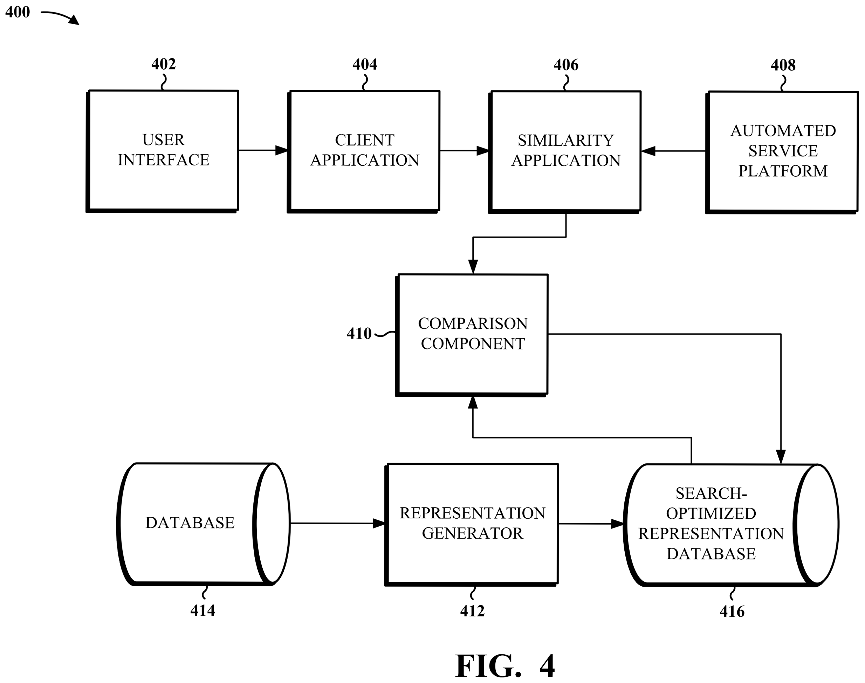

FIG. 4 is a block diagram illustrating an example system 400 for processing and comparing agronomic entity data. The system 400 may include various components designed to process, analyze, and compare agronomic entity data for agricultural management tasks. As shown, the system 400 may include a user interface 402, a client application 404, a similarity application 406, an automated service platform 408, a comparison component 410, a representation generator 412, a database 414, and a search-optimized representation database 416. One or more of the components shown in FIG. 4, including the user interface 402, the client application 404, the similarity application 406, the automated service platform 408, the comparison component 410, the representation generator 412, the database 414, and the search-optimized representation database 416 may be, be similar to, include, or be included in, one or more of components of the agronomic data management platform 112 shown in FIG. 1, and/or one or more of the components of the computing device 200 shown in FIG. 2. For example, the user interface 402 and the client application 404 may be implemented by the computing device 104 shown in FIG. 1. As another example, the similarity application 406, the automated service platform 408, the comparison component 410, the representation generator 412, the database 414, and the search-optimized representation database 416 may be components of the agronomic data management platform 112 shown in FIG. 1.

In some implementations, the user interface 402 may be configured to receive input from users and display output to users. For example, the user interface 402 may accept search criteria for finding similar agricultural fields, such as soil composition, climate patterns, or geometric characteristics. The user interface 402 may also display results of similarity searches, including visualizations of similar fields or recommendations for agronomic management operations.

In some implementations, the user interface 402 may include sub-components such as a data input form, a results visualization panel, and an interactive map. The data input form may allow users to specify search criteria and parameters, while the results visualization panel may present similarity search results in various formats, such as charts, graphs, or tables. In some implementations, the user interface 402 may incorporate advanced visualization techniques, such as augmented reality (AR) or virtual reality (VR) interfaces, to provide immersive experiences for exploring and comparing agronomic entities.

The client application 404 may be communicatively coupled to the user interface 402. In some implementations, the client application 404 may be responsible for handling user interactions, processing user input, and managing the overall flow of data between the user interface and other components of the system. For instance, the client application 404 may validate and format user input before sending it to other components for processing. It may also receive and format results data for presentation in the user interface 402. In some implementations, the user interface 402 may be instantiated by the client application 404.

In some implementations, the client application 404 may employ different architectures, such as a microservices-based approach or a serverless architecture, to improve scalability and maintainability. In some implementations, the client application 404 may also incorporate offline functionality, allowing users to work with cached data when network connectivity is limited. In some implementations, the client application 404 may be configured to operate as a client of the similarity application 406, which may be implemented as, or on, a server.

The similarity application 406 may be communicatively coupled to the client application 404. In some implementations, the similarity application 406 may be responsible for coordinating the similarity search process and managing communication between various components of the system 400. For example, the similarity application 406 may receive search requests from the client application 404, initiate the similarity search process, and return results to the client application 404 for display.

In some implementations, the similarity application 406 may include sub-components such as a query parser, a search coordinator, and a results formatter. The query parser may interpret and validate search requests, while the search coordinator may orchestrate the similarity search process across multiple system components such as the user interface 402, the client application 404, the similarity application 406, the automated service platform 408, and/or the comparison component 410, among other examples. In some implementations, the similarity application 406 may incorporate advanced features such as query optimization techniques or support for complex, multi-step search workflows.

The automated service platform 408 may be communicatively coupled to the similarity application 406. In some implementations, the automated service platform 408 may be responsible for providing automated services and integrating with external systems. For example, the automated service platform 408 may include applications configured to interface with the agronomic data management platform. For example, such applications may include automated crop management systems or machine settings optimization tools.

In some implementations, the automated service platform 408 may employ different integration approaches, such as event-driven architectures or message queues, to facilitate real-time data exchange with external systems. In some implementations, the automated service platform 408 may also incorporate machine learning models or other artificial intelligence systems that can analyze agronomic data and generate recommendations for agricultural operations.

The comparison component 410 may be communicatively coupled to the similarity application 406. In some implementations, the comparison component 410 may be instantiated by the similarity application 406, called by the similarity application 406 (e.g., via a function call of an application programming interface (API)), or implemented on the similarity application 406 (e.g., as a service). In some implementations, the comparison component 410 may be implemented on one or more servers that are part of the similarity application 406. In some implementations, the comparison component 410 may be implemented as a separate service.

In some implementations, the comparison component 410 may be responsible for performing the actual similarity comparisons between agronomic entities. For instance, the comparison component 410 may use vector similarity calculations to efficiently identify candidate matches from a large database of entity representations. The vector similarity calculations may be performed based on search criteria provided by a user, a tool, or computer-executable instructions, among other examples. In some implementations, the comparison component 410 may include sub-components such as a similarity metric calculator, a ranking engine, or a filtering module. The similarity metric calculator may compute similarity scores between entity representations, while the ranking engine may sort and prioritize results based on these scores. In some implementations, the comparison component 410 may incorporate similarity search techniques to improve search performance for large-scale datasets.

The representation generator 412 may be configured to generate comprehensive numeric representations of agronomic entities based on available data. For example, the representation generator 412 may process various types of input data, including image data, tabular data, and text data, to create unified entity representations. In some implementations, the representation generator 412 may employ different data processing techniques, such as feature extraction methods or data fusion algorithms, to create more accurate or efficient entity representations. In some implementations, the representation generator 412 may incorporate dynamic feature weighting capabilities, allowing the system 400 to adjust the importance of different features based on the specific context of the similarity search. In some implementations, dynamic feature weighting may be used to manipulate feature groups within representations to affect feature bias in representation and/or to facilitate generating recommendations and attributions based on combinations of agronomic contexts, among other examples. For example, the representation generator 412 may generate a number of different representations associated with an agronomic entity, each of which may correspond to a different agronomic context or combination of agronomic contexts.

The database 414 may be communicatively coupled to the representation generator 412. In some implementations, the database 414 may be configured to store raw data or features associated with agronomic entities. In some implementations, the database 414 may be configured to store any number of different types of data, including tabular data, image data, text data, and numerical data. For example, the database 414 may contain satellite imagery, soil sensor readings, weather data, and historical crop yield information for various agricultural fields. In some implementations, the database 414 may employ various database technologies, such as columnar storage or time-series optimized databases, to efficiently store and retrieve large volumes of agronomic data. In some implementations, the database 414 may incorporate distributed storage systems or cloud-based storage solutions to provide scalability and high availability.

The representation database 416 may be communicatively coupled to both the representation generator 412 and the comparison component 410. In some implementations, the representation database 416 may be configured to store the generated entity representations. For example, the representation database 416 may store the representations in a format optimized for similarity searches. For instance, the representation database 416 may store high-dimensional vectors that encapsulate various characteristics of agronomic entities. In some implementations, the representation database 416 may employ specialized indexing structures, such as vector indexes or multi-dimensional spatial indexes, to facilitate fast similarity searches. In some implementations, the representation database 416 may also incorporate versioning or temporal aspects, allowing the system to track changes in entity representations over time and perform historical analyses.

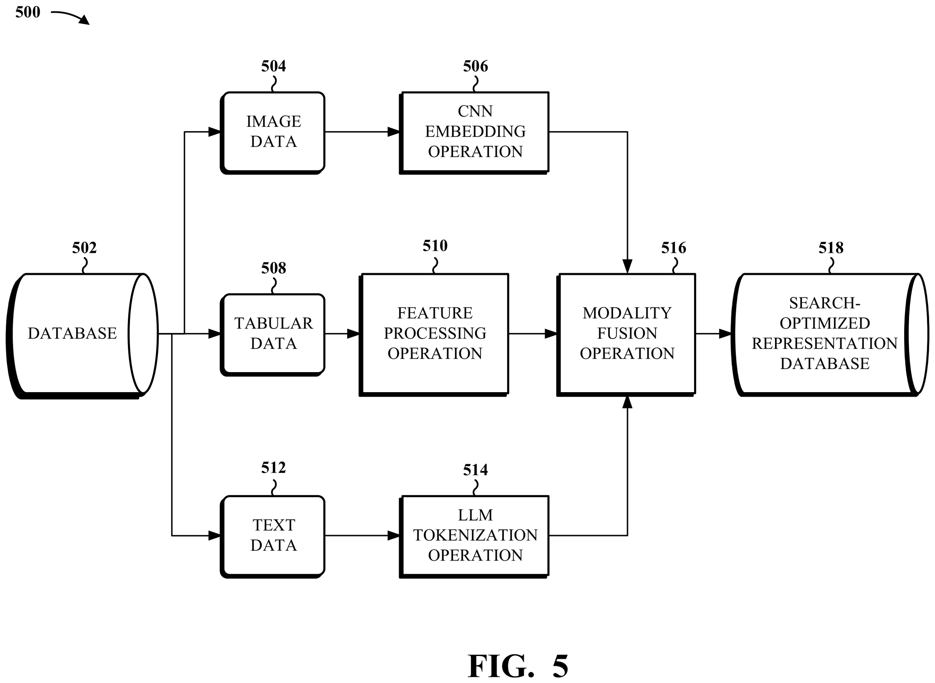

FIG. 5 is a block diagram illustrating an example process 500 for generating entity representations. The process 500 may be performed by a representation generator such as the representation generator 120 shown in FIG. 1 and/or the representation generator 412 shown in FIG. 4. As shown, as database 502 may store various types of data related to agronomic entities.

This data may include, for example, image data 504. In some implementations, the image data 504 may represent visual information related to agronomic entities, such as satellite or aerial imagery of agricultural fields. For instance, the image data 504 may include multispectral or hyperspectral images capturing various aspects of crop health, soil moisture, or field geometry. In some implementations, the image data 504 may be stored in formats optimized for efficient processing, such as compressed image formats or tiled image pyramids. In some implementations, the image data 504 may incorporate additional types of visual data, such as drone-captured imagery or ground-level photographs, to provide a more comprehensive visual representation of agronomic entities.

The image data 504 may be provided, as input, to a CNN embedding operation 506 (or any embedding tool optimized for image-structured data). In some implementations, the CNN embedding operation 506 may include processing the image data using a CNN to generate image embeddings. For example, the CNN may extract high-level features from field images, such as crop row patterns, field boundaries, or vegetation indices. In some implementations, the CNN used in this operation may be pre-trained on large datasets of agricultural imagery and fine-tuned for specific tasks. In some implementations, the CNN embedding operation 506 may employ more than one CNN and/or different neural network architectures, such as residual networks or vision transformers, to generate image embeddings with varying characteristics.

The data stored in the database 502 may include tabular data 508. In some implementations, the tabular data 508 may represent structured information related to agronomic entities, such as soil test results, crop yield history, or weather station measurements. For instance, the tabular data 508 may include time series of temperature and precipitation data, or tables of soil nutrient levels across different field zones. In some implementations, the tabular data 508 may be stored in formats optimized for efficient querying and analysis, such as columnar databases or data cubes. In some implementations, the tabular data 508 may incorporate additional types of structured data, such as machine telemetry or market price information, to provide a more comprehensive representation of agronomic factors.

The tabular data 508 may be provided, as input, to a feature processing operation 510. In some implementations, the feature processing operation 510 may include extracting and processing relevant features from the tabular data. For example, the feature processing operation 510 may include performing operations such as normalization, scaling, or encoding of categorical variables. In some implementations, the feature processing operation 510 may include the generation of derived features, such as moving averages of weather data or soil quality indices. In some implementations, the feature processing operation 510 may be performed using various feature engineering techniques, such as automated feature selection algorithms or domain-specific transformations, to create more informative representations of the tabular data.

The data stored in the database 502 may include text data 512. In some implementations, the text data 512 may represent unstructured textual information related to agronomic entities, such as field notes, crop management logs, or scientific literature. For instance, the text data 512 may include descriptions of pest occurrences, records of fertilizer applications, or summaries of crop rotation practices. In some implementations, the text data 512 may be stored in formats optimized for natural language processing, such as indexed document collections or text corpora. In some implementations, the text data 512 may incorporate additional sources of textual data, such as social media posts or agricultural news feeds, to provide a broader context for agronomic decision-making.

The text data 512 may be provided, as input, to an LLM tokenization operation 514. In some implementations, the LLM tokenization operation 514 may include processing the text data using an LLM to generate representational embeddings. For example, the LLM tokenization operation 514 may include converting textual descriptions into numerical representations that capture semantic meaning and contextual relationships. In some implementations, the LLM used in this operation may be pre-trained on large corpora of agricultural texts and fine-tuned for specific agronomic tasks. In some implementations, the LLM tokenization operation 514 may include performing different text embedding techniques, such as word2vec or BERT-based models, to generate text representations with varying characteristics.

For each particular agronomic entity, the outputs of the CNN embedding operation 506, the feature processing operation 510, and the LLM tokenization operation may be provided, as inputs, to a modality fusion operation 516. In some implementations, the modality fusion operation 516 may include combining the inputs into a unified representation. For example, the modality fusion operation 516 may include integrating image embeddings, processed tabular features, and representational embeddings to create a comprehensive representation of an agronomic entity. In some implementations, the modality fusion operation 516 may include performing techniques such as concatenation, weighted averaging, or more complex neural network-based fusion models. The output of the modality fusion operation 516 may be, or include, one or more entity representations for each agronomic entity. For example, the different context-specific representations may be generated for each agronomic entity.

The one or more entity representations may be stored in a representation database 518. In some implementations, the representation database 518 may contain high-dimensional vectors that encapsulate various characteristics of agronomic entities, combining information from images, tabular data, and text. In some implementations, the representation database 518 may employ specialized indexing structures, such as vector indexes or multi-dimensional spatial indexes, to facilitate fast similarity searches. In some implementations, the representation database 518 may incorporate versioning or temporal aspects, allowing the system to track changes in entity representations over time and perform historical analyses.

In some implementations, the process 500 may support dynamic feature weighting within the modality fusion operation 516. This capability may allow the system to adjust the importance of different features or modalities based on the specific context of an agronomic task, generating different entity representations for different agronomic contexts or combinations of agronomic contexts. For instance, when comparing fields for crop rotation planning, the system may place higher importance on soil composition data and historical crop information when searching for similar entities. Thus, having representations in which these features are emphasized may facilitate this process. This flexibility may facilitate providing more relevant and actionable insights across a wide range of agricultural use cases.

The process 500 may incorporate techniques for handling missing or incomplete data across different modalities. In some implementations, the modality fusion operation 516 may employ imputation methods or robust fusion algorithms that can generate meaningful representations even when certain data types are unavailable. For example, if satellite imagery is obscured by cloud cover, the system may rely more heavily on tabular and textual data to create an entity representation. This adaptability may enhance the system's reliability and applicability across diverse agricultural scenarios with varying data availability.

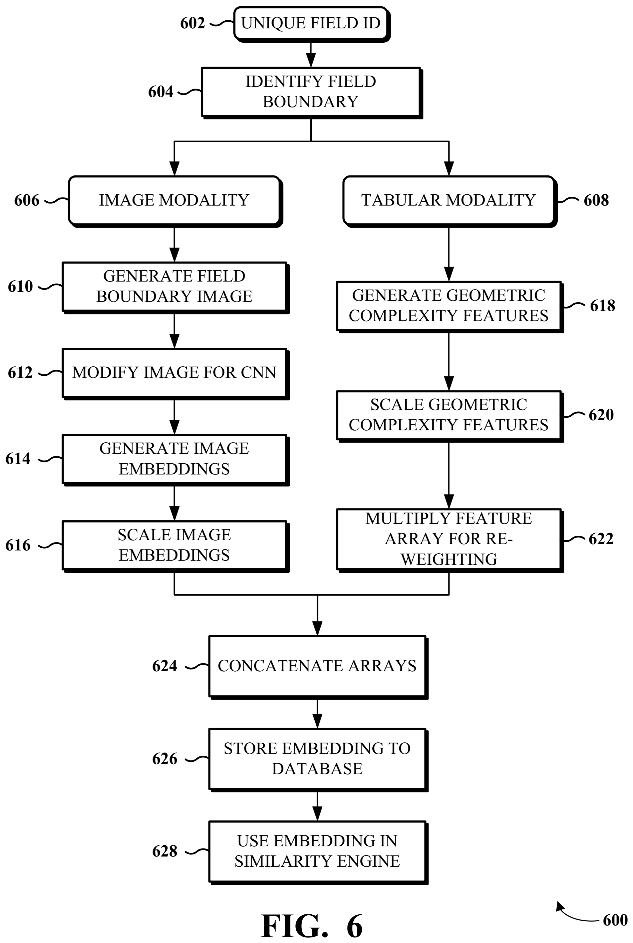

FIG. 6 is a flowchart illustrating an example process 600 for generating and processing field embeddings using multiple data modalities. The process 600 may be performed by a representation generator such as the representation generator 120 shown in FIG. 1 and/or the representation generator 412 shown in FIG. 4.

In some implementations, to facilitate fast, accurate searching by distance-based measurements in a high-dimensional space, embeddings may be generated in accordance with any number of different criteria. For example, the criteria may specify that the embeddings are to contain numeric elements created from features that acceptably represent the entity within a given context. For example, these features may be identified through domain knowledge as well as experimental evidence. In some implementations, the criteria may specify that the embeddings are to include individual elements that equally impact the high-dimensional position of the embedding. In some implementations, this may be accomplished by min-max scaling each element to fall between 0 and 1. To enable ongoing embedding generation after the initial creation of the searching database, the range of minimum and maximum parameters may be determined (e.g., based on practically defined values or through analysis of available data) and stored in a way that is accessible by the embedding process. In some implementations, the criteria may specify that the embeddings are to include equally weighted groups of elements from different concepts. For example, if a ten-element array is used to express one concept (such as in-season precipitation), and only one element is used to express another concept (such as crop yield), the first concept may be ten times more impactful on the position of the final concatenated representation. In some implementations, this may be resolved by adding copies of one or both arrays until the arrays have an equal impact on the final embedded representation.

While different use-cases may have different, unique embedding processes, the processes may share the common goal of creating embeddings that adhere to criteria such as the criteria described above. The process 600 is an example of how this is achieved within a use-case of comparing geometric complexity of fields' boundaries. In this case, the final embedding may be derived from the combination of two independent data processing methods, one of which is created for image data and one for tabular data.

As shown in FIG. 6, the process 600 may begin with a unique field ID 602. In some implementations, the unique field ID 602 may be an alphanumeric code, a geographic coordinate, or a system-generated ID that uniquely identifies an agronomic entity such as, for example, a specific agricultural field or zone. For example, the unique field ID 602 may be a combination of a farm ID and a field number, such as "FARM123-FIELD01." In some implementations, the unique field ID 602 may incorporate additional information, such as crop type or growing season, to provide more context about the field being processed.

At 604, a field boundary may be identified based on the unique field ID 602. In some implementations, step 604 may involve querying a database to retrieve geographic coordinates or a polygon representation of the field boundary. For instance, the field boundary may be defined by a series of latitude and longitude coordinates that outline the perimeter of the field. In some implementations, step 604 may utilize satellite imagery or LiDAR data to dynamically determine the field boundary based on visual or topographic features. In some implementations, step 604 may leverage historical operational data, about operations that have taken place on the field, to generate a boundary for the field.

From step 604, the process 600 may branch into two parallel paths: an image modality path 606 and a tabular modality path 608. These parallel paths may allow for simultaneous processing of different data types related to the same field, facilitating efficient generation of a more comprehensive representation of the agronomic entity.

The image modality path 606 may begin with step 610, where a field boundary image is generated. In some implementations, step 610 may involve creating a two-dimensional plot or raster image based on the field boundary coordinates identified in step 604. For example, the field boundary image may be a binary mask where pixels inside the field boundary are set to one value and pixels outside are set to another. In some implementations, step 610 may incorporate additional visual information, such as satellite imagery or drone-captured photos, to create a more detailed representation of the field. In some implementations, JavaScript Object Notation (JSON) data indicating coordinates defining the boundaries of the field may be used to create a two-dimensional plot of the field's boundary, which may be saved as an image file.

Following the generation of the field boundary image, at 612, the image is modified for processing by a CNN (or by some other architecture). For example, the image may be processed to ensure that it is compatible with a CNN. This processing may involve resizing the image, cropping the image, padding the image, or converting the image channels to RGB. For example, step 612 may involve resizing the image to a standardized dimension, such as 224×224 pixels, to ensure compatibility with pre-trained CNN architectures. The modification process may include operations such as normalization of pixel values, conversion to a specific color space (e.g., RGB to grayscale), or application of data augmentation techniques like random rotations or flips. Some implementations of step 612 may employ more advanced preprocessing techniques, such as histogram equalization or adaptive thresholding, to enhance specific features of the field boundary image.

After the image modification, at 614, image embeddings are generated. In some implementations, step 614 may involve passing the modified field boundary image through a CNN to extract high-level features. For example, the CNN may be a pre-trained architecture such as a residual neural network (ResNet) or a visual geometry group (VGG) neural network, fine-tuned on a dataset of agricultural field images. The output of this step may be a fixed-length vector representing the salient features of the field boundary image. In some implementations, step 614 may utilize other deep learning models, such as vision transformers or graph neural networks, to generate image embeddings that capture different aspects of the field's visual characteristics. In some implementations, the final fully connected layer of the CNN may be unfrozen and re-sized to fit a desired image embedding size.

At 616, the image embeddings are scaled. In some implementations, step 616 may involve normalizing the embedding vector elements to a specific range, such as [0, 1], to ensure consistency across different fields and to facilitate subsequent similarity comparisons. For instance, min-max scaling or z-score normalization may be applied to the embedding values. Some implementations of step 616 may employ more sophisticated scaling techniques, such as robust scaling to handle outliers, or learnable scaling parameters that adapt to the distribution of the data. The image embeddings may be included in an image embedding array.

Parallel to the image modality path, the tabular modality path 608 may begin with step 618, where geometric complexity features are generated. The geometric complexity features may be included in a feature array. In some implementations, step 618 may involve calculating various metrics that quantify the shape and structure of the field boundary. For example, these features may include measures such as the field's perimeter-to-area ratio, fractal dimension, or shape indices like elongation and compactness. In some implementations, step 618 may incorporate additional geometric features derived from topographic data, such as slope variability or drainage patterns, to provide a more comprehensive representation of the field's physical characteristics. In some implementations, step 618 may include passing JSON data of coordinates defining the field boundary into a component that performs operations on geometric shapes. These operations may output values for human-defined (or AI-defined) geometric characteristics of interest such as elongation, circularity, or convex complexity, among other examples.

Following the generation of geometric complexity features, at 620, these features are scaled. Similar to the scaling of image embeddings, step 620 may involve normalizing the geometric feature values to a consistent range, such as [0, 1]. This scaling process may facilitate ensuring that all features contribute proportionally to the final field representation, regardless of their original units or magnitudes. Some implementations of step 620 may employ feature-specific scaling methods, such as log-transformation for highly skewed features or quantile normalization to handle non-normal distributions.

At 622, the feature array is multiplied for re-weighting. For example, the geometric complexity feature array may contain far fewer elements than the image embedding array. To give each modality an equal impact on the final representation, the array of geometric complexity features may be copied multiple times until the resulting array contains approximately the same number of elements as the image embedding array. For example, step 622 may involve creating multiple copies of the scaled feature array and concatenating them. For example, if the image embedding array has 256 dimensions and the geometric feature array has 16 dimensions, the feature array may be repeated 16 times to match the dimensionality of the image data. Some implementations of step 622 may employ more sophisticated re-weighting schemes, such as learned attention mechanisms or dynamic weighting based on the specific context of the similarity search.

The outputs from both the image modality path 606 and the tabular modality path 608 converge at step 624, where the arrays are concatenated. In some implementations, step 624 may involve combining the scaled image embeddings and the re-weighted geometric feature arrays into a single, high-dimensional embedding. This concatenation process creates a unified representation that captures both the visual and geometric characteristics of the field. Some implementations of step 624 may explore more advanced fusion techniques, such as cross-modal attention mechanisms or tensor fusion, to capture complex interactions between the different data modalities.

At 626, the final embedding is added to a database. In some implementations, step 626 may involve storing the high-dimensional vector representation of the field in a search-optimized database, such as a vector database or a multi-dimensional index structure. This step may facilitate efficient retrieval and comparison of field representations in subsequent similarity searches. Some implementations of step 626 may incorporate versioning or temporal aspects, allowing the system to track changes in field representations over time and support historical analyses.

At 628, the embedding is used in a similarity engine. In some implementations, step 628 may involve utilizing the stored field representation in vector similarity calculations to identify similar fields or to support various agronomic management operations. For example, the similarity engine may employ techniques such as cosine similarity or Euclidean distance to compare the field embedding with other field representations in the database. Some implementations of step 628 may explore more advanced similarity measures, such as learned metric spaces or context-dependent similarity functions, to improve the accuracy and relevance of field comparisons for specific agricultural applications.

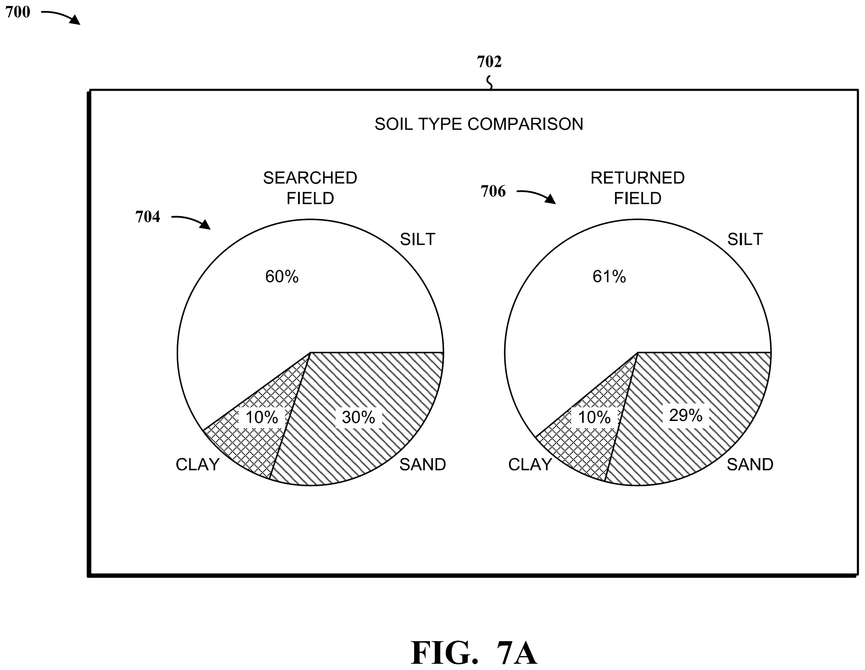

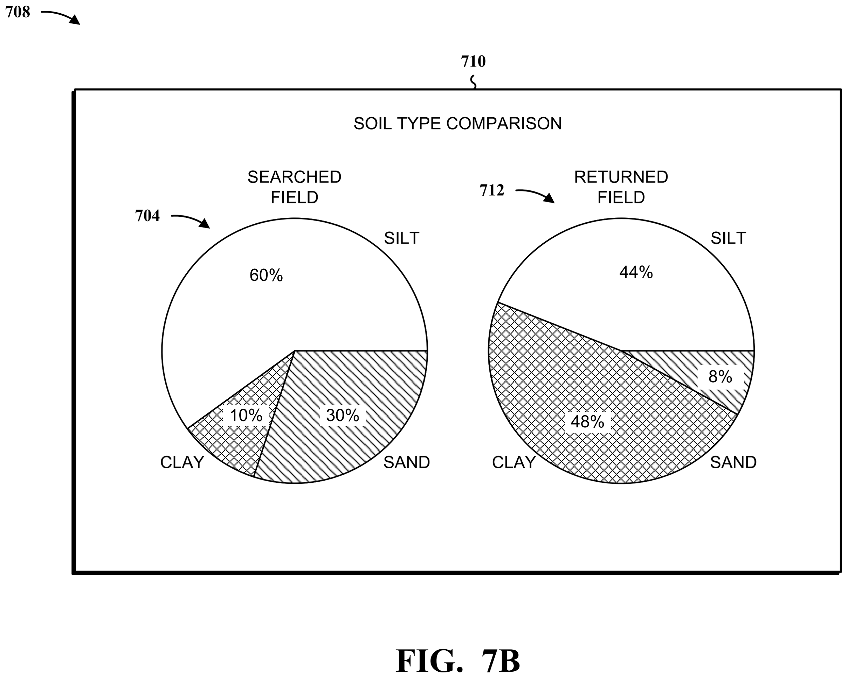

FIGS. 7A and 7B are examples of GUIs for presenting results data associated with similar agronomic entity searching. For example, the GUIs shown in FIGS. 7A and 7B may be generated based on search results returned by a system such as the agronomic data management platform 112 shown in FIG. 1. The GUIs shown in FIGS. 7A and 7B may be displayed on one or more computing devices associated with one or more users. For example, the GUIs shown in FIGS. 7A and 7B may be displayed on a display device associated with a computing device such as the computing device 104 shown in FIG. 1. The GUI shown in FIG. 7A may represent a view of search results associated with similar fields, whereas the GUI shown in FIG. 7B may represent a view of search results associated with fields that are not similar to one another, at least as compared to the fields represented in the GUI shown in FIG. 7A. In some implementations, each of the GUIS shown in FIGS. 7A and 7B may be displayed in response to a user input associated with searching similar agricultural entities.

FIG. 7A depicts an example 700 showing a soil type comparison between two agricultural fields. The example 700 includes a GUI 702 that displays two pie charts: a searched field data representation 704 and a returned field data representation 706. In some implementations, the searched field data representation 704 may show soil composition percentages for an agronomic entity (e.g., a field) that was used as the basis for a similarity search. The pie chart in the searched field data representation 704 indicates soil compositions consisting of silt, sand, and clay.

In the example shown, the searched field has a soil composition of 60% silt, 30% sand, and 10% clay. The returned field data representation 706 may show a similar pie chart for a field that was identified by the system as having similar characteristics to the searched field. In some implementations, this returned field may be one of the results obtained from the similarity search process described in previous figures. In the example shown in FIG. 7A, the returned field data representation 706 (61% silt, 29% sand, 10% clay) displays nearly identical soil composition percentages to the searched field: 60% silt, 30% sand, and 10% clay. In some implementations, the nearly identical soil compositions between the searched and returned fields may indicate a high degree of similarity in terms of soil characteristics. This similarity may be valuable for various agronomic management operations, such as determining appropriate crop selection, fertilization strategies, or irrigation practices that may be transferable between the two fields.

FIG. 7B depicts another example 708 showing a soil type comparison between two agricultural fields. The example 708 includes a GUI 710 that displays two pie charts: a searched field data representation 704 (which may be the same as in FIG. 7A) and a returned field data representation 712.

In this example, the searched field data representation 704 again shows soil composition percentages of 60% silt, 30% sand, and 10% clay for the searched field. However, the returned field data representation 712 displays different soil composition percentages for the returned field: 44% silt, 48% clay, and 8% sand. The difference in soil compositions between the searched and returned fields in FIG. 7B may illustrate that the similarity search process can identify fields with related but not identical characteristics. In some implementations, this may be useful for comparing management practices across fields with varying soil compositions or for understanding how different soil types may impact crop performance under similar conditions.

In some implementations, users may be enabled to interact with the pie charts, such as hovering over segments to see exact percentage values or clicking on segments to access more detailed information about each soil type. This interactivity may enhance the user's ability to analyze and compare the soil characteristics of different fields.

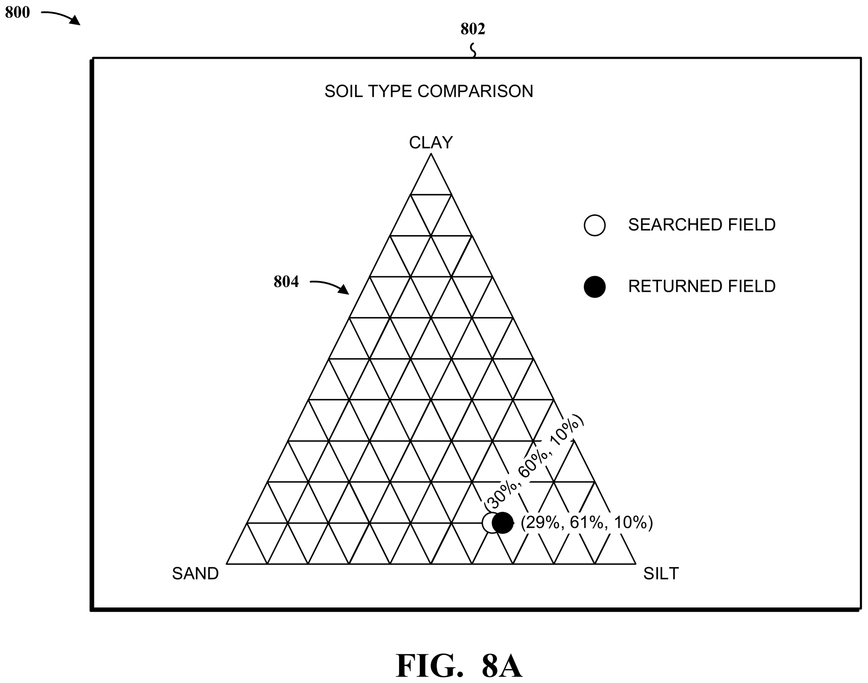

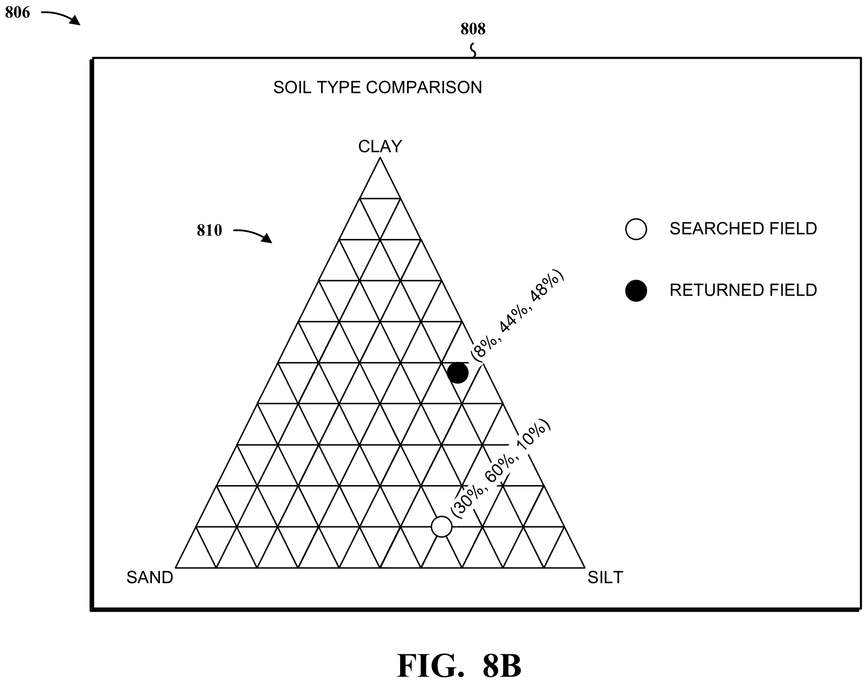

FIGS. 8A and 8B are other examples of GUIs for presenting results data associated with similar agronomic entity searching. For example, the GUIs shown in FIGS. 8A and 8B may be generated based on search results returned by a system such as the agronomic data management platform 112 shown in FIG. 1. The GUIs shown in FIGS. 8A and 8B may be displayed on one or more computing devices associated with one or more users. For example, the GUIs shown in FIGS. 8A and 8B may be displayed on a display device associated with a computing device such as the computing device 104 shown in FIG. 1. The GUI shown in FIG. 8A may represent a view of search results associated with similar fields, whereas the GUI shown in FIG. 8B may represent a view of search results associated with fields that are not similar to one another, at least as compared to the fields represented in the GUI shown in FIG. 8A. In some implementations, each of the GUIS shown in FIGS. 8A and 8B may be displayed in response to a user input associated with searching similar agricultural entities.

FIG. 8A depicts an example 800 that includes a GUI 802 containing a triangular data representation 804 for comparing soil compositions between searched and returned agricultural fields. In some implementations, the triangular data representation 804 may be a soil texture triangle, a standard tool used in soil science to classify soil types based on their sand, silt, and clay content. The three axes of the triangle may represent the percentages of clay, sand, and silt, with each corner of the triangle representing 100% of one component and 0% of the others. The data representation 804 shows two points plotted on the triangular grid. In some implementations, an open circle may represent the searched field, while a filled circle may represent a returned field identified as similar by the system. The position of each point on the triangle may indicate the relative percentages of clay, sand, and silt in the soil of each field. In some implementations, the circles may be distinguished using colors, textures, or fill patterns, among other examples. In some implementations, shapes other than circles may be used.

In the example shown in FIG. 8A, the two points appear to be plotted very close to each other on the triangular grid. This proximity may suggest a high degree of similarity in soil composition between the searched and returned fields. In some implementations, this visualization may allow users to quickly assess how closely the soil textures of different fields match, which could be valuable for various agronomic decision-making processes.

FIG. 8B depicts another example 806 that includes a GUI 808 containing a data representation 810. Similar to FIG. 8A, this representation uses a triangular grid to plot soil composition percentages for clay, sand, and silt content. In the data representation 810, two distinct points are displayed - an open circle representing a searched field and a filled circle representing a returned field. Unlike in FIG. 8A, these points are positioned at different coordinates within the triangular grid, indicating different soil composition percentages between the searched and returned fields.

The separation between the two points in FIG. 8B may illustrate that the similarity search process can identify fields with related but not identical soil compositions. In some implementations, this type of comparison may be useful for understanding how different soil textures might impact crop performance or management practices under otherwise similar conditions.

In some implementations, the system may allow users to interact with the triangular representations, such as zooming in on specific areas of the triangle or hovering over points to see exact percentage values for each soil component. This interactivity may enhance the user's ability to analyze and compare soil textures across different fields in detail.

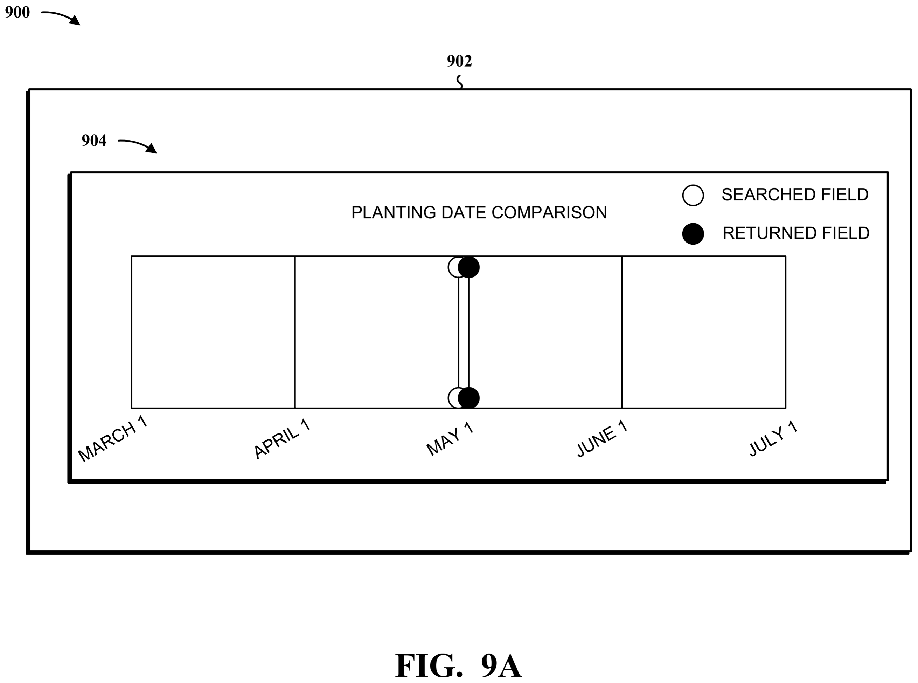

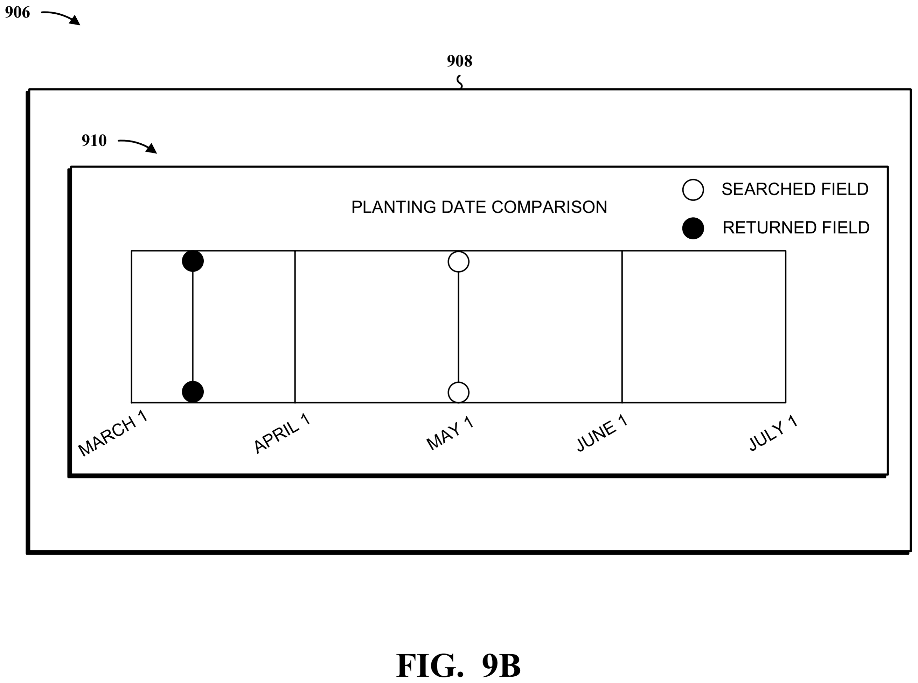

FIGS. 9A and 9B are other examples of GUIs for presenting results data associated with similar agronomic entity searching. For example, the GUIs shown in FIGS. 9A and 9B may be generated based on search results returned by a system such as the agronomic data management platform 112 shown in FIG. 1. The GUIs shown in FIGS. 9A and 9B may be displayed on one or more computing devices associated with one or more users. For example, the GUIs shown in FIGS. 9A and 9B may be displayed on a display device associated with a computing device such as the computing device 104 shown in FIG. 1. The GUI shown in FIG. 9A may represent a view of search results associated with similar fields, whereas the GUI shown in FIG. 9B may represent a view of search results associated with fields that are not similar to one another, at least as compared to the fields represented in the GUI shown in FIG. 9A. In some implementations, each of the GUIS shown in FIGS. 9A and 9B may be displayed in response to a user input associated with searching similar agricultural entities.

FIG. 9A depicts an example 900 that includes a GUI 902 containing a data representation 904 for comparing planting date data between agricultural fields. In some implementations, the data representation 904 may display a timeline comparison between a searched field and a returned field. The timeline may represent a portion of the growing season, with specific dates or time periods indicated along its length. In the example shown, an open circle may represent the planting date for the searched field, while a filled circle may represent the planting date for a returned field identified as similar by the system. In some implementations, the circles may be distinguished using colors, textures, or fill patterns, among other examples. In some implementations, shapes other than circles may be used.

In FIG. 9A, the data points for both the searched and returned fields appear to overlap, connected by a horizontal line. This overlap may indicate that both fields have matching planting dates. In some implementations, this similarity in planting dates could be a significant factor in identifying fields with potentially comparable growing conditions or management needs. The matching planting dates may suggest that these fields could have similar crop development timelines, which could be valuable information for various agronomic management operations. For example, this similarity might inform decisions about timing for fertilizer applications, pest control measures, or harvest planning.

FIG. 9B depicts another example 906 that includes a GUI 908 containing a data representation 910. Similar to FIG. 9A, this representation displays a timeline comparison of planting date data between agricultural fields. However, in this example, the planting dates for the searched and returned fields differ.

In the data representation 910, open circles may represent planting dates for the searched field, while filled circles may represent planting dates for a returned field. The circles are connected by vertical lines, but unlike in FIG. 9A, these lines do not overlap, indicating different planting dates between the fields. In some implementations, the difference in planting dates shown in FIG. 9B may illustrate that the similarity search process can identify fields with related characteristics even when certain parameters, such as planting dates, do not exactly match. This capability may be useful for comparing fields across different planting windows or for understanding how variations in planting dates might impact crop development and management needs in otherwise similar fields.

The system may, in some implementations, allow users to interact with these timeline representations. For example, users might be able to hover over data points to see exact dates, or click on them to access more detailed information about planting conditions or subsequent crop development stages. This interactivity could enhance the user's ability to analyze and compare timing-related factors across different fields.

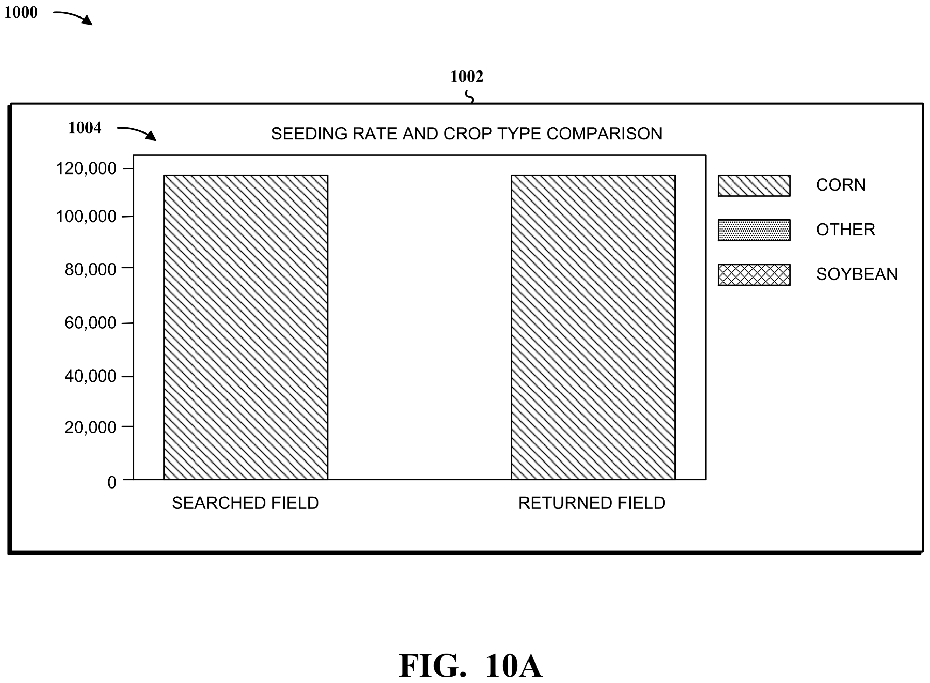

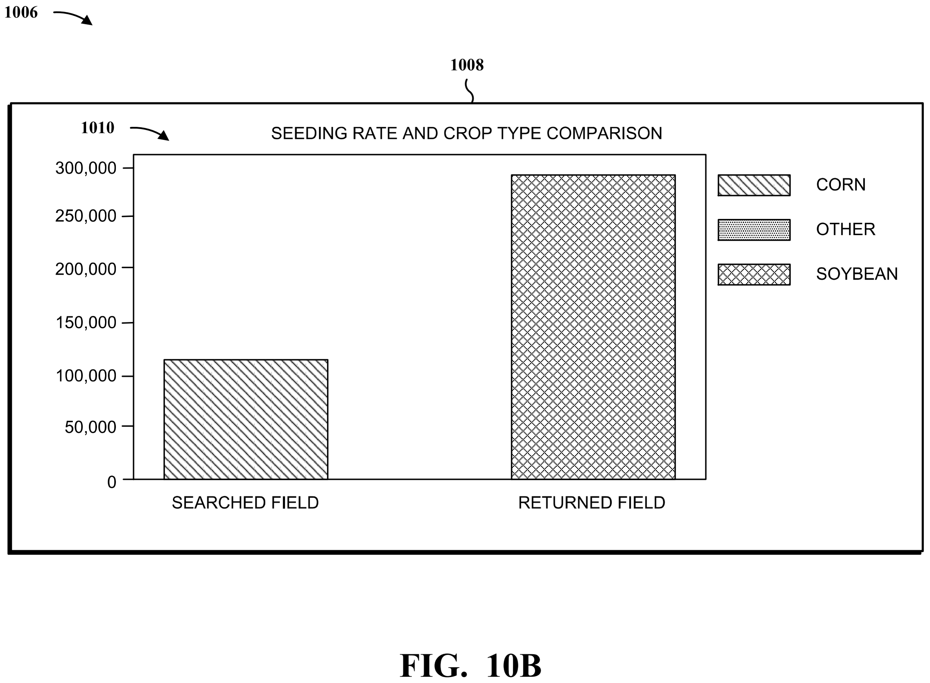

FIGS. 10A and 10B are other examples of GUIs for presenting results data associated with similar agronomic entity searching. For example, the GUIs shown in FIGS. 10A and 10B may be generated based on search results returned by a system such as the agronomic data management platform 112 shown in FIG. 1. The GUIs shown in FIGS. 10A and 10B may be displayed on one or more computing devices associated with one or more users. For example, the GUIs shown in FIGS. 10A and 10B may be displayed on a display device associated with a computing device such as the computing device 104 shown in FIG. 1. The GUI shown in FIG. 10A may represent a view of search results associated with similar fields, whereas the GUI shown in FIG. 10B may represent a view of search results associated with fields that are not similar to one another, at least as compared to the fields represented in the GUI shown in FIG. 10A. In some implementations, each of the GUIS shown in FIGS. 10A and 10B may be displayed in response to a user input associated with searching similar agricultural entities.

FIG. 10A depicts an example 1000 that includes a GUI 1002 containing a data representation 1004 for comparing seeding rate and crop type data between agricultural fields. In some implementations, the data representation 1004 may display a bar chart comparing seeding rates between a searched field and a returned field. The x-axis of the chart may represent seeding rates, with numerical values ranging from 0 to 120,000, indicating seeds per acre or another relevant unit of measurement. The y-axis may distinguish between the searched and returned fields. The bar chart in FIG. 10A includes a legend indicating different crop types, which may include corn, soybean, and other crops. Each bar in the chart may be divided or patterned to show the proportion of different crop types within each field. This multi-dimensional representation may allow for comparison of both seeding rates and crop diversity between fields in a single visualization.

In the example shown, the searched and returned fields appear to have similar overall seeding rates and crop type distributions. This similarity may be one of the factors that led the system to identify these fields as similar in the search process. In some implementations, such a comparison could be valuable for benchmarking purposes or for transferring successful management practices between similar fields.

FIG. 10B depicts another example 1006 that includes a GUI 1008 containing a data representation 1010. Similar to FIG. 10A, this representation uses a bar chart to compare seeding rates and crop types between a searched field and a returned field. However, in this example, there are notable differences between the fields. The data representation 1010 includes numerical values along the x-axis ranging from 0 to 300,000, indicating a different scale of seeding rates compared to FIG. 10A. The bars representing the searched and returned fields show different patterns, suggesting variations in both seeding rates and crop type distributions between the fields.

In some implementations, the differences illustrated in FIG. 10B may demonstrate that the similarity search process can identify fields with related characteristics even when certain parameters, such as seeding rates or crop type distributions, are not identical. This capability may be useful for comparing management practices across a range of seeding strategies or for understanding how variations in seeding rates and crop selections might impact overall field performance.

The system may, in some implementations, allow users to interact with these bar chart representations. For example, users might be able to hover over different sections of the bars to see exact seeding rate values for each crop type, or click on them to access more detailed information about crop varieties or historical yield data. This interactivity could enhance the user's ability to analyze and compare seeding strategies across different fields in detail.

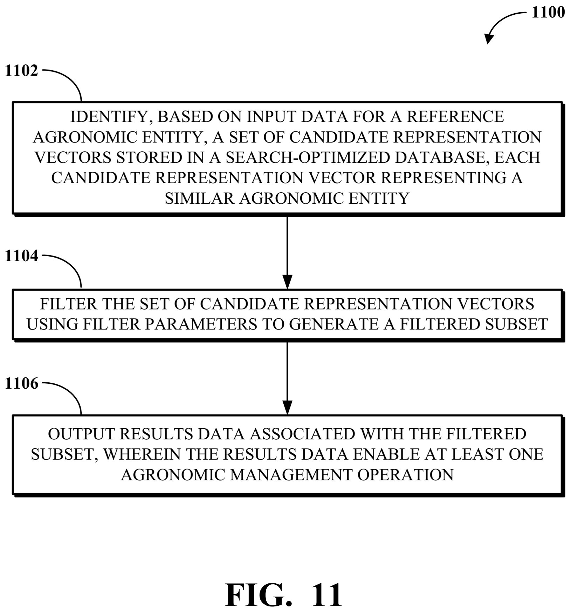

To further describe some implementations in greater detail, reference is next made to examples of techniques which may be performed by or using the agronomic data management platform as described herein. FIG. 11 is a flowchart of an example of a technique 1100 associated with agronomic data management. The technique 1100 can be executed using computing devices, such as the systems, hardware, and software described with respect to FIGS. 1-10B. The technique 1100 can be performed, for example, by executing a machine-readable program or other computer-executable instructions, such as routines, instructions, programs, or other code. The steps, or operations, of the technique 1100, or another technique, method, process, or algorithm described in connection with the implementations disclosed herein can be implemented directly in hardware, firmware, software executed by hardware, circuitry, or a combination thereof.

For simplicity of explanation, the technique 1100 is depicted and described herein as a series of steps or operations. However, the steps or operations of the technique 1100 can occur in various orders and/or concurrently. Additionally, other steps or operations not presented and described herein may be used. Furthermore, not all illustrated steps or operations may be required to implement a technique in accordance with the disclosed subject matter.

At 1102, the technique 1100 includes identifying, based on input data for a reference agronomic entity, a set of candidate representation vectors stored in a search-optimized database, each candidate representation vector representing a similar entity candidate of a set of similar entity candidates. For example, a similarity engine (e.g., the similarity engine 118 shown in FIG. 1) may receive input data related to an agronomic entity and use this data to query a search-optimized database containing representation vectors of various agronomic entities. In some implementations, the input data may include a unique identifier for a specific agronomic entity, such as a field ID, customer ID, or machine ID. The input data may include search criteria for finding similar entities, which may encompass soil composition data, climate patterns, geometric characteristics of fields, or operational parameters of agricultural machinery, among other entity-defining data attributes.

In some implementations, the identification of candidate representation vectors may involve using vector similarity calculations to efficiently identify potential matches from the database. For instance, the technique 1100 may employ techniques such as cosine similarity, Euclidean distance, or more advanced methods like LSH or approximate nearest neighbor (ANN) algorithms. These techniques may allow for rapid, sub-second searches across vast datasets of agricultural entities, even when comparing against millions of other entity representations.

The search-optimized database used in step 1102 may be implemented using various technologies to facilitate fast retrieval and comparison of entity representations. For example, the database may utilize indexing structures such as LSH or HNSW graphs to enable efficient approximate nearest neighbor searches. These indexing structures may allow the similarity engine to quickly identify candidate matches without exhaustively comparing every entity in the database, potentially reducing search times from hours to milliseconds for large-scale datasets.

At 1104, the technique 1100 includes filtering the set of candidate representation vectors using filter parameters to generate a filtered subset. For example, a comparison component (e.g., the comparison component 410 shown in FIG. 4) may apply additional constraints or preferences to the set of candidate representation vectors identified in step 1102. In some implementations, the filter parameters may be based on various aspects of agronomic information, such as the presence of certain features or data types, or the similarity of those features or data types.

The filtering process may involve various methods including, without limitation, clustering, dimensionality reduction, and threshold-based criteria. For instance, results may be filtered based on geographic proximity, ownership information, or specific attribute thresholds. In some implementations, this step may involve re-ranking the results based on secondary criteria or applying a diversity algorithm to ensure a range of different but relevant matches are presented.

In some implementations, the filter parameters may include specific conditions, such as thresholds for similar entities and/or distances between entities. For example, a filter parameter may indicate that only matching representations be returned that include a particular soil characteristic such as pH or nitrogen content. Alternatively, a filter parameter may specify that only the top 10 matching entities be returned in the search results. The filter parameters may be indicative of access permissions or restrictions, such as whether the entity is visible to certain users or systems or whether the entity can be queried.

At 1106, the technique 1100 includes outputting results data associated with the filtered subset, wherein the results data enable at least one agronomic management operation. For example, a client application (e.g., the client application 124 shown in FIG. 1) may receive and display the filtered results to a user, or an automated service platform (e.g., the automated service platform 108 shown in FIG. 1) may use the results to initiate or adjust agronomic management operations. The results data may comprise at least one entity ID corresponding to at least one similar entity candidate of the set of similar entity candidates.

In some implementations, the results data may be used to enable various agronomic management operations. For instance, the similar entity IDs may be used to retrieve successful management practices or optimal machine settings that have been effective for similar fields. This information could be used to adjust planting densities, fertilizer applications, or irrigation schedules for the queried field. The results data may be used for benchmarking purposes, allowing farmers to compare their performance against similar operations.

The agronomic management operations enabled by the results data may include, but are not limited to, machine settings establishment operations, machine settings adjustment operations, or the display of representations of similar entity candidates. For example, the system may use the results to automatically configure or adjust settings on agricultural equipment such as tractors, combines, or irrigation systems based on the characteristics of similar fields identified in the search.

In some implementations, the technique 1100 may include additional steps not explicitly shown in FIG. 11. For instance, the system may determine that the search-optimized database omits an entity representation associated with the reference agronomic entity being queried. In such cases, the system may generate at least one entity representation of the agronomic entity and store it in the search-optimized database for future use.

The generation of entity representations may involve processing multiple data modalities, including image data, tabular data, and text data. For image data, the system may use an image-optimized architecture (e.g., a CNN) to generate image embeddings. Tabular data may be processed to create geometric complexity feature arrays, while text data may undergo tokenization to generate representational embeddings. Text data may be processed to generate a set of representational embeddings based on data derived from textual content, including at least one of a word, a number, or text-based data. The entity representation may be generated based on the set of representational embeddings. These diverse data types may then be combined through a modality fusion operation, which may involve simple concatenation or more complex neural network-based fusion models, depending on the context of the agronomic entity.

In some implementations, the technique 1100 may be iterative, with the results of one similarity search being used to refine subsequent searches. For example, a user or automated tool may select one of the returned similar entities and use it as the basis for a new search, effectively exploring the similarity space of agronomic entities. This iterative approach may be particularly useful for discovering relationships or for fine-tuning management strategies based on the characteristics of the most relevant similar entities.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

Persons skilled in the art will understand that the various embodiments of the present disclosure and shown in the accompanying figures constitute non-limiting examples, and that additional components and features may be added to any of the embodiments discussed hereinabove without departing from the scope of the present disclosure. Additionally, persons skilled in the art will understand that the elements and features shown or described in connection with one embodiment may be combined with those of another embodiment without departing from the scope of the present disclosure to achieve any desired result and will appreciate further features and advantages of the presently disclosed subject matter based on the description provided. Variations, combinations, and/or modifications to any of the embodiments and/or features of the embodiments described herein that are within the abilities of a person having ordinary skill in the art are also within the scope of the present disclosure, as are alternative embodiments that may result from combining, integrating, and/or omitting features from any of the disclosed embodiments.

Use of the term "optionally" with respect to any element of a claim means that the element may be included or omitted, with both alternatives being within the scope of the claim. Additionally, use of broader terms such as "comprises," "includes," and "having" should be understood to provide support for narrower terms such as "consisting of," "consisting essentially of," and "comprised substantially of." Accordingly, the scope of protection is not limited by the description set out above, but is defined by the claims that follow, and includes all equivalents of the subject matter of the claims.

In the preceding description, reference may be made to the spatial relationship between the various structures illustrated in the accompanying drawings, and to the spatial orientation of the structures. However, as will be recognized by those skilled in the art after a complete reading of this disclosure, the structures described herein may be positioned and oriented in any manner suitable for their intended purpose. Thus, the use of terms such as "above," "below," "upper," "lower," "inner," "outer," "left," "right," "upward," "downward," "inward," "outward," "horizontal," "vertical," etc., should be understood to describe a relative relationship between the structures and/or a spatial orientation of the structures. Those skilled in the art will also recognize that the use of such terms may be provided in the context of the illustrations provided by the corresponding figure(s).

Additionally, terms such as "approximately," "generally," "substantially," and the like should be understood to allow for variations in any numerical range or concept with which they are associated and encompass variations on the order of 25% (e.g., to allow for manufacturing tolerances and/or deviations in design). For example, the term "generally parallel" should be understood as referring to configurations in with the pertinent components are oriented so as to define an angle therebetween that is equal to 180° ± 25% (e.g., an angle that lies within the range of (approximately) 135° to (approximately) 225°). The term "generally parallel" should thus be understood as referring to encompass configurations in which the pertinent components are arranged in parallel relation.

Although terms such as "first," "second," "third," etc., may be used herein to describe various operations, elements, components, regions, and/or sections, these operations, elements, components, regions, and/or sections should not be limited by the use of these terms in that these terms are used to distinguish one operation, element, component, region, or section from another. Thus, unless expressly stated otherwise, a first operation, element, component, region, or section could be termed a second operation, element, component, region, or section without departing from the scope of the present disclosure.

Each and every claim is incorporated as further disclosure into the specification and represents embodiments of the present disclosure. Also, the phrases "at least one of A, B, and C" and "A and/or B and/or C" should each be interpreted to include only A, only B, only C, or any combination of A, B, and C.

Embodiments of the invention can be described with reference to the following numbered clauses, with preferred features laid out in dependent clauses:
1. A computer-implemented method, comprising:
   identifying, based on input data for a reference agronomic entity, a set of candidate representation vectors stored in a search-optimized database, each candidate representation vector representing a similar entity candidate of a set of similar entity candidates;
   filtering the set of candidate representation vectors based on filter parameters to generate a filtered subset; and
   outputting results data associated with the filtered subset, wherein the results data enables at least one agronomic management operation.
2. The computer-implemented method of clause 1, further comprising:
   obtaining entity data associated with an agronomic entity of the reference agronomic entity, the entity data comprising at least one of image data, tabular data, or text data;
   generating an entity representation of the agronomic entity based on the entity data; and
   storing the generated entity representation of the agronomic entity in a representation database.
3. The computer-implemented method of clause 2, wherein the entity data comprises the image data, and wherein generating the entity representation of the agronomic entity comprises:
   generating modified image data by pre-processing the image data;
   generating, based on a machine learning component, a set of image embeddings based on the modified image data; and
   generating the entity representation of the agronomic entity based on the set of image embeddings.
4. The computer-implemented method of clause 3, wherein the machine learning component comprises an image-optimized architecture.
*5.* The computer-implemented method of any one of clauses 2 to 4, further comprising pre-processing the image data by:
   identifying an entity boundary of the agronomic entity based on at least one of the image data or an entity ID corresponding to the agronomic entity;
   generating, based on a set of coordinates corresponding to the entity boundary, an entity boundary image; and
   modifying the entity boundary image by performing at least one of a resizing operation, a cropping operation, a padding operation, or a color conversion operation.
6. The computer-implemented method of any one of clauses 2 to 4, wherein the entity data comprises the text data, and wherein generating the entity representation of the agronomic entity comprises:
   generating, based on a machine learning component, a set of representational embeddings based on data derived from textual content, including at least one of a word, a number, or text-based data; and
   generating the entity representation of the agronomic entity based on the set of representational embeddings.
7. The computer-implemented method of clause 6, wherein generating the set of representational embeddings comprises generating the set of representational embeddings by performing a tokenization operation.
8. The computer-implemented method of any one of clauses 2 to 7, wherein the entity data comprises the tabular data, and wherein generating the entity representation of the agronomic entity comprises:
   generating, based on a machine learning component, a set of tabular embeddings based on the tabular data; and
   generating the entity representation of the agronomic entity based on the set of tabular embeddings.
9. The computer-implemented method of clause 8, wherein generating the set of tabular embeddings comprises:
   generating a geometric complexity feature array based on the tabular data; and
   generating one or more copies of the geometric complexity feature array, wherein the geometric complexity feature array and the one or more copies comprise the set of tabular embeddings.
10. The computer-implemented method of any one of clauses 2 to 9, wherein the entity data comprises a first data modality and a second data modality, and wherein generating the entity representation of the agronomic entity comprises:
   generating, based on a first machine learning component, a first set of embeddings based on the first data modality;
   generating, based on a second machine learning component, a second set of embeddings based on the second data modality; and
   generating the entity representation by performing a modality fusion operation based on the first set of embeddings and the second set of embeddings.
11. The computer-implemented method of clause 10, wherein the modality fusion operation is based on a context of the agronomic entity.
12. The computer-implemented method of clause 10, wherein performing the modality fusion operation comprises concatenating the first data modality with the second data modality.
13. The computer-implemented method of clause 10, wherein performing the modality fusion operation comprises encoding, using a neural network-based fusion model, a combination of the first data modality and the second data modality to generate the entity representation.
14. A system, the system comprising:
   one or more memories; and
   one or more processors communicatively coupled to the one or more memories and configured to execute instructions stored in the one or more memories to cause the system to:
      identify, based on input data for a reference agronomic entity, a set of candidate representation vectors stored in a search-optimized database, each candidate representation vector representing a similar entity candidate of a set of similar entity candidates;
      filter the set of candidate representation vectors using filter parameters to generate a filtered subset; and
      output results data associated with the filtered subset, wherein the results data enable at least one agronomic management operation.
*15.* The system of clause 14, wherein the results data comprises at least one entity identifier (ID) corresponding to at least one similar entity candidate of the set of similar entity candidates.
16. The system of clause 14 or clause 15, wherein the at least one agronomic management operation comprises at least one of a machine settings establishment, a machine settings adjustment, a biological input decision, an operational efficiency improvement, a resource allocation optimization, a technology adoption opportunity, or a display of a representation of at least one similar entity candidate of the set of similar entity candidates.
17. The system of any one of clauses 14 to 16, wherein the one or more processors are configured to execute the instructions to further cause the system to:
   determine that the search-optimized database omits an entity representation associated with the reference agronomic entity;
   generate at least one entity representation of the reference agronomic entity; and
   store the at least one entity representation of the reference agronomic entity in the search-optimized database.
18. One or more non-transitory computer readable media storing instructions operable to cause one or more processors to perform operations, the operations comprising:
   identifying, based on input data for a reference agronomic entity, a set of candidate representation vectors stored in a search-optimized database, each candidate representation vector representing a similar entity candidate of a set of similar entity candidates;
   filtering the set of candidate representation vectors using filter parameters to generate a filtered subset; and
   outputting results data associated with the filtered subset, wherein the results data enable at least one agronomic management operation.
19. The one or more non-transitory computer readable media of clause 18, the operations further comprising obtaining, based on the results data, at least one of a set of machine settings, a set of agronomic strategies, a set of parameter values associated with an agronomic tool, or an indication of a change in a user interface of the agronomic tool.
20. The one or more non-transitory computer readable media of clause 18 or clause 19, the operations further comprising:
   determining that the search-optimized database omits an entity representation associated with the reference agronomic entity;
   generating at least one entity representation of the reference agronomic entity; and
   storing the at least one entity representation of the reference agronomic entity in the search-optimized database.

## Claims

1. A computer-implemented method, comprising:
identifying, based on input data for a reference agronomic entity, a set of candidate representation vectors stored in a search-optimized database, each candidate representation vector representing a similar entity candidate of a set of similar entity candidates;
filtering the set of candidate representation vectors based on filter parameters to generate a filtered subset; and
outputting results data associated with the filtered subset, wherein the results data enables at least one agronomic management operation.

2. The computer-implemented method of claim 1, further comprising:
obtaining entity data associated with an agronomic entity of the reference agronomic entity, the entity data comprising at least one of image data, tabular data, or text data;
generating an entity representation of the agronomic entity based on the entity data; and
storing the generated entity representation of the agronomic entity in a representation database.

3. The computer-implemented method of claim 2, wherein the entity data comprises the image data, and wherein generating the entity representation of the agronomic entity comprises:
generating modified image data by pre-processing the image data;
generating, based on a machine learning component, a set of image embeddings based on the modified image data; and
generating the entity representation of the agronomic entity based on the set of image embeddings.

4. The computer-implemented method of claim 3, further comprising pre-processing the image data by:
identifying an entity boundary of the agronomic entity based on at least one of the image data or an entity ID corresponding to the agronomic entity;
generating, based on a set of coordinates corresponding to the entity boundary, an entity boundary image; and
modifying the entity boundary image by performing at least one of a resizing operation, a cropping operation, a padding operation, or a color conversion operation.

5. The computer-implemented method of claim 2, wherein the entity data comprises the text data, and wherein generating the entity representation of the agronomic entity comprises:
generating, based on a machine learning component, a set of representational embeddings based on data derived from textual content, including at least one of a word, a number, or text-based data; and
generating the entity representation of the agronomic entity based on the set of representational embeddings.

6. The computer-implemented method of claim 2, wherein the entity data comprises the tabular data, and wherein generating the entity representation of the agronomic entity comprises:
generating, based on a machine learning component, a set of tabular embeddings based on the tabular data; and
generating the entity representation of the agronomic entity based on the set of tabular embeddings.

7. The computer-implemented method of claim 6, wherein generating the set of tabular embeddings comprises:
generating a geometric complexity feature array based on the tabular data; and
generating one or more copies of the geometric complexity feature array, wherein the geometric complexity feature array and the one or more copies comprise the set of tabular embeddings.

8. The computer-implemented method of any one of claims 2 to 7, wherein the entity data comprises a first data modality and a second data modality, and wherein generating the entity representation of the agronomic entity comprises:
generating, based on a first machine learning component, a first set of embeddings based on the first data modality;
generating, based on a second machine learning component, a second set of embeddings based on the second data modality; and
generating the entity representation by performing a modality fusion operation based on the first set of embeddings and the second set of embeddings.

9. A system, the system comprising:
one or more memories; and
one or more processors communicatively coupled to the one or more memories and configured to execute instructions stored in the one or more memories to cause the system to:
identify, based on input data for a reference agronomic entity, a set of candidate representation vectors stored in a search-optimized database, each candidate representation vector representing a similar entity candidate of a set of similar entity candidates;
filter the set of candidate representation vectors using filter parameters to generate a filtered subset; and
output results data associated with the filtered subset, wherein the results data enable at least one agronomic management operation.

10. The system of claim 9, wherein the results data comprises at least one entity identifier, ID, corresponding to at least one similar entity candidate of the set of similar entity candidates.

11. The system of claim 9 or claim 10, wherein the at least one agronomic management operation comprises at least one of a machine settings establishment, a machine settings adjustment, a biological input decision, an operational efficiency improvement, a resource allocation optimization, a technology adoption opportunity, or a display of a representation of at least one similar entity candidate of the set of similar entity candidates.

12. The system of any one of claims 9 to 11, wherein the one or more processors are configured to execute the instructions to further cause the system to:
determine that the search-optimized database omits an entity representation associated with the reference agronomic entity;
generate at least one entity representation of the reference agronomic entity; and
store the at least one entity representation of the reference agronomic entity in the search-optimized database.

13. One or more non-transitory computer readable media storing instructions operable to cause one or more processors to perform operations, the operations comprising:
identifying, based on input data for a reference agronomic entity, a set of candidate representation vectors stored in a search-optimized database, each candidate representation vector representing a similar entity candidate of a set of similar entity candidates;
filtering the set of candidate representation vectors using filter parameters to generate a filtered subset; and
outputting results data associated with the filtered subset, wherein the results data enable at least one agronomic management operation.

14. The one or more non-transitory computer readable media of claim 13, the operations further comprising obtaining, based on the results data, at least one of a set of machine settings, a set of agronomic strategies, a set of parameter values associated with an agronomic tool, or an indication of a change in a user interface of the agronomic tool.

15. The one or more non-transitory computer readable media of claim 13 or claim 14, the operations further comprising:
determining that the search-optimized database omits an entity representation associated with the reference agronomic entity;
generating at least one entity representation of the reference agronomic entity; and storing the at least one entity representation of the reference agronomic entity in the search-optimized database.
